# EUROPEAN PATENT APPLICATION

(11) **EP 4 831 847 A1**
(43) Date of publication of application: **28.10.2026**
(21) Application number: 26174057.5
(22) Date of filing: 22.04.2026
(51) Int. Cl.: G06F 21/55, G06F 21/57, H04L 9/40

(54) **THREAT MODELING WITH ARTIFICIAL INTELLIGENCE**

(30) Priority: 22.04.2025 US 202519186538
(71) Applicant: Nvidia Corporation, Santa Clara, CA 95051 (US)
(72) Inventor: ASHKENAZI, Alon, Santa Clara, 95051 (US); SHIFRIN, Dmitri, Santa Clara, 95051 (US); ROHRER, Daniel, Santa Clara, 95051 (US)
(74) Representative: Mathys & Squire

(57) **Abstract**

Disclosed are systems and techniques for threat modeling with artificial intelligence. The techniques include providing a first subset of a plurality of content items related to a target system architecture as input to a diagram parser to obtain a diagram parser output. The techniques further include providing the diagram parser output and a second subset of the plurality of content items as input to a first artificial intelligence (Al) embedding model to obtain a first AI embedding model output comprising encoded representations of the diagram parser output and the second subset of the plurality of content items. The techniques further include providing at least a first portion of the encoded representations of the diagram parser output and the second subset of the plurality of content items as input to a first generative AI model to obtain a plurality of potential threats related to the target system architecture.

## Description

### TECHNICAL FIELD

At least one embodiment pertains to computing systems, and more specifically, to performing threat modeling for a computer system.

### BACKGROUND

Computer systems can be susceptible to malicious actions, such as unauthorized access, data exfiltration, and/or the like. To protect against such actions, threat modeling can be performed, which can involve identifying potential attack vectors and assessing corresponding risks. Traditional threat modeling can rely heavily on manual inspection of architecture diagrams, data flow charts, and system documentation. This can be time-consuming, error-prone, and dependent on specialized expertise, leading to inconsistencies and gaps in security coverage.

### SUMMARY

The invention is defined by the claims. In order to illustrate the invention, aspects and embodiments which may or may not fall within the scope of the claims are described herein.

Disclosed are systems and techniques for threat modeling with artificial intelligence. The techniques include providing a first subset of a plurality of content items related to a target system architecture as input to a diagram parser to obtain a diagram parser output. The techniques further include providing the diagram parser output and a second subset of the plurality of content items as input to a first artificial intelligence (AI) embedding model to obtain a first AI embedding model output comprising encoded representations of the diagram parser output and the second subset of the plurality of content items. The techniques further include providing at least a first portion of the encoded representations of the diagram parser output and the second subset of the plurality of content items as input to a first generative AI model to obtain a plurality of potential threats related to the target system architecture.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF THE DRAWINGS

FIG. 1 is a block diagram of an example computer system for threat modeling with artificial intelligence, according to at least one embodiment.
FIG. 2 is a block diagram of an example data flow for threat modeling of a target system architecture with artificial intelligence, according to at least one embodiment.
FIG. 3 is a block diagram of an example data flow for data processing as part of threat modeling of a target system architecture with artificial intelligence, according to at least one embodiment.
FIG. 4 is a block diagram of an example data flow for threat generation as part of threat modeling of a target system architecture with artificial intelligence, according to at least one embodiment.
FIG. 5 is a block diagram of an example data flow for mitigation recommendation generation as part of threat modeling of a target system architecture with artificial intelligence, according to at least one embodiment.
FIG. 6 is a block diagram of an example data flow for severity calculation as part of threat modeling of a target system architecture with artificial intelligence, according to at least one embodiment.
FIG. 7 is a block diagram of an example data flow for threat analysis summary generation as part of threat modeling of a target system architecture with artificial intelligence, according to at least one embodiment.
FIG. 8 is a flow diagram of an example method for threat modeling with artificial intelligence, according to at least one embodiment.
FIG. 9 is a flow diagram of an example method for threat modeling with artificial intelligence, according to at least one embodiment.
FIG. 10 is a block diagram illustrating an exemplary computer system, in accordance with at least one embodiment of the present disclosure.
FIG. 11A is a block diagram of an example generative language model system suitable for use in implementing some embodiments of the present disclosure.
FIG. 11B is a block diagram of an example generative language model that includes a transformer encoder-decoder suitable for use in implementing some embodiments of the present disclosure.
FIG. 11C is a block diagram of an example generative language model that includes a decoder-only transformer architecture suitable for use in implementing some embodiments of the present disclosure.

### DETAILED DESCRIPTION

As software systems grow in complexity, manual processes struggle to keep up, causing delays in threat identification and mitigation. This lag increases vulnerability to attacks, risking significant security breaches and associated damages. The manual nature of traditional threat modeling also introduces a high risk of human error, limiting scalability, and consistency.

Aspects of the present disclosure address the above and other deficiencies by providing for systems and techniques that allow for threat modeling with artificial intelligence (AI). The disclosed AI-powered threat modeling system can perform threat modeling for a particular target system. The AI-powered threat modeling system can first identify target system assets, connections, data flows, and architectures by analyzing architecture diagrams, system documentation, and data flow charts. For example, a graphical representation of a system architecture can be provided to a diagram parser to obtain a diagram parser output that describes the graphical representation of the system architecture. The diagram parser can be an AI vision model or a program that parses one or more digital file formats that can encode a graphical representation of the system architecture. The diagram parser output can include a textual description of the system architecture identifying system assets and connections between the different system assets. In some embodiments, a user can provide a textual description of the system architecture or modify the diagram parser output. The diagram parser output can be provided to an AI embedding model, which can encode the information described in the diagram parser output within an embedding space for later retrieval.

Additional textual descriptions of the system assets (e.g., system documentation) can be provided to the AI embedding model to encode the information described in the textual descriptions within the embedding space for later retrieval.

After parsing the target system documentation, the AI-powered threat modeling system can generate potential threats to the target system. For example, the AI-powered threat modeling system may determine, based on the target system documentation, which system assets are connected to one another. For each connection, the AI-powered threat modeling system may generate one or more potential threats. For example, for a first connection between a first asset and a second asset, the AI-powered threat modeling system may retrieve embedding information related to the first asset, the second asset, and the connection itself. The embedding information may be combined with a "threat generation" text prompt to create a "threat generation input."

In some embodiments, the "threat generation" text prompt can include details to ensure the generated threats are complete and take into account the threat to the connection and the assets as well as its impact on the connection, the assets, other assets, and/or the overall system. In some embodiments, the "threat generation" text prompt can include details to generate the threats based on one or more threat assessment methodologies, such as CIA (Confidentiality, Integrity, and Availability) or STRIDE (Spoofing, Tampering, Repudiation, Information Disclosure, Denial of Service, and Elevation of Privilege).

The "threat generation input" may be provided to an AI model (e.g., a large language model (LLM)), which can output one or more potential threats related to the connection between the first asset and the second asset. This can repeat for one or more of the connections of the target system. Embedding information can be retrieved for the assets in the connection, the embedding information can be combined with a text prompt, and the "threat generation input" can be provided to an AI model to generate one or more potential threats related to the connection between the assets.

After generating the potential threats to the target system, the AI-powered threat modeling system can determine which potential threats have been mitigated and can provide recommended mitigation strategies. A mitigation catalog can be prepared by providing one or more mitigation reference documents to an AI embedding model. Then, a first identified threat can be selected, mitigation embedding information can be retrieved based on the first identified threat, and target system asset embedding information can be retrieved for each asset associated with the threat. The threat and embedding information can be combined with a "mitigation generation" text prompt to create a "mitigation generation input." The "mitigation generation input" may be provided to an AI model (e.g., an LLM), which can output information describing whether the potential threat has already been mitigated in the target system or information describing steps that should be taken to mitigate the potential threat in the target system. This can repeat for one or more of the potential threats previously identified.

After generating mitigations for the potential threats to the target system, the AI-powered threat modeling system can determine a risk score for the potential threats. The risk score can be based on a combination of a potential impact of the potential threat to the target system, how many mitigations are already in place for the potential threat, an amount of effort, skills, knowledge, etc. required by an attacker, and/or the like.

In some embodiments, an AI model can be used to generate the risk score. A risk catalog can be prepared by providing one or more documents describing attacker efforts, resources, skills, and the like to an AI embedding model. Then, a potential threat, the generated mitigation information for the potential threat, and risk embedding information from the risk catalog are combined with a "risk generation" text prompt to create a "risk generation input." The "risk generation input" can be provided to an AI model, which can output a risk level associated with the potential threat based on the mitigations that are currently in place and the impact of the potential threat. In some embodiments, the risk score can be calculated using one or more algorithms, such as an algorithm that provides positive (e.g., high) scores to threats based on a potential impact of the potential threat to the target system and negative (e.g., low) scores to threats that have already been mitigated or the like. For example, a potential threat may have an impact score of 10, but if the potential threat has already been mitigated, the risk score may be 0 (e.g., impact score of 10 minus mitigation score of 10 = 0 overall risk score).

The output of the AI-powered threat modeling system can be a set of potential threats to the target system, mitigations for the potential threats, and risk scores corresponding to the potential threats. In some embodiments, the output can be sorted based on the risk scores of the potential threats, so that the potential threats with the highest risk scores are shown first to a user.

Advantages of the disclosed embodiments over the existing technology include but are not limited to reduced human error, expedited threat identification, and streamlined determination of countermeasures, resulting in enhanced overall security.

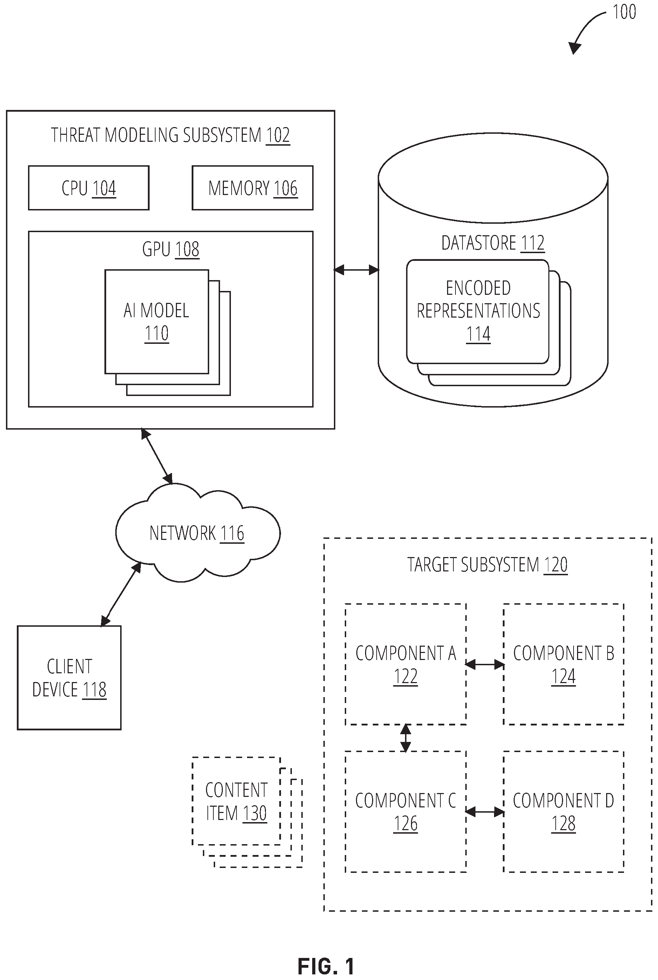

FIG. 1 is a block diagram of an example computer system 100 for threat modeling with artificial intelligence, according to at least one embodiment. System 100 can include threat modeling subsystem 102 for performing threat modeling of another system or subsystem, such as target subsystem 120. Threat modeling subsystem 102 can be connected to one or more client devices 118 via network 116. Network 116 can be a public network (e.g., the Internet), a private network (e.g., a local area network (LAN) or wide area network (WAN)), a wired network (e.g., Ethernet network), a wireless network (e.g., an 802.11 network or a Wi-Fi network), a cellular network (e.g., a Long Term Evolution (LTE) network), routers, hubs, switches, server computers, and/or a combination thereof.

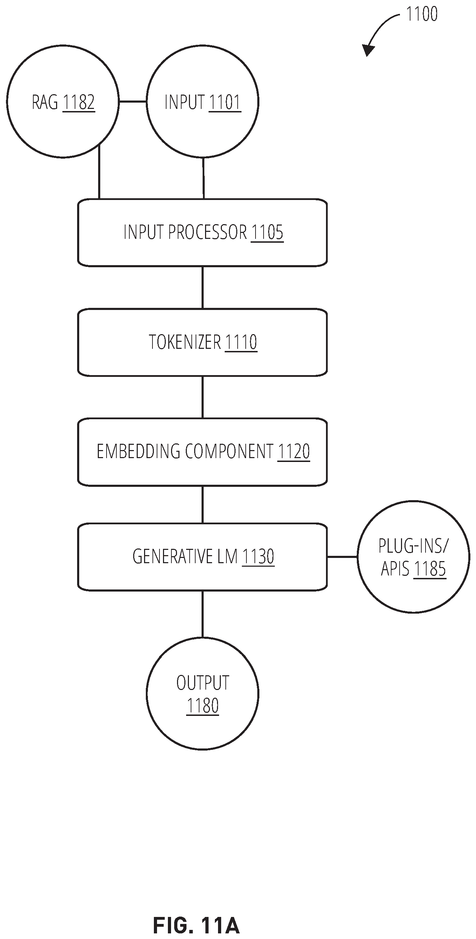

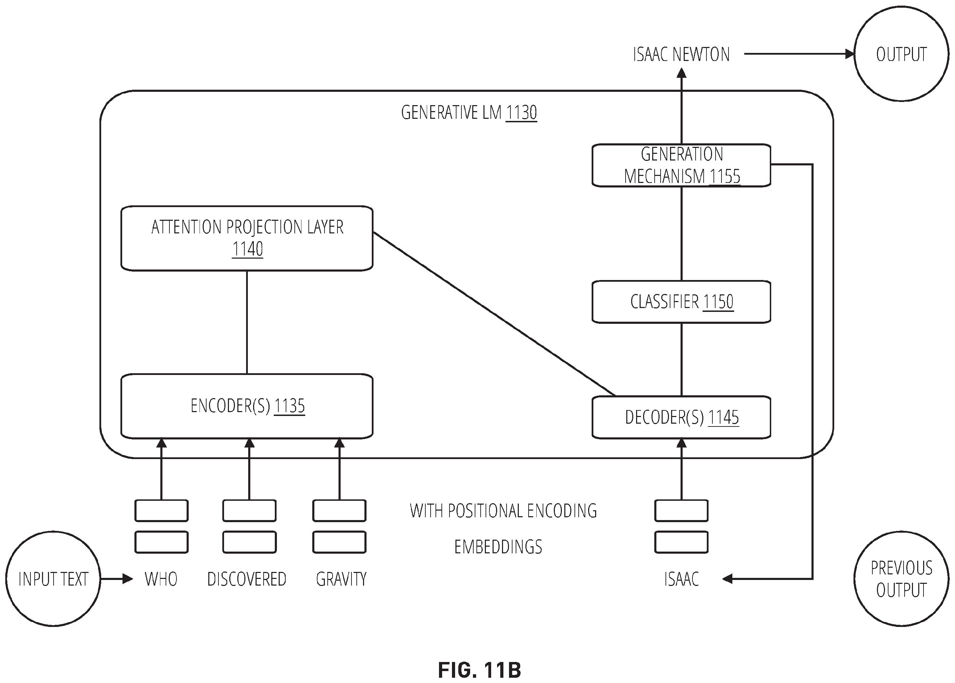

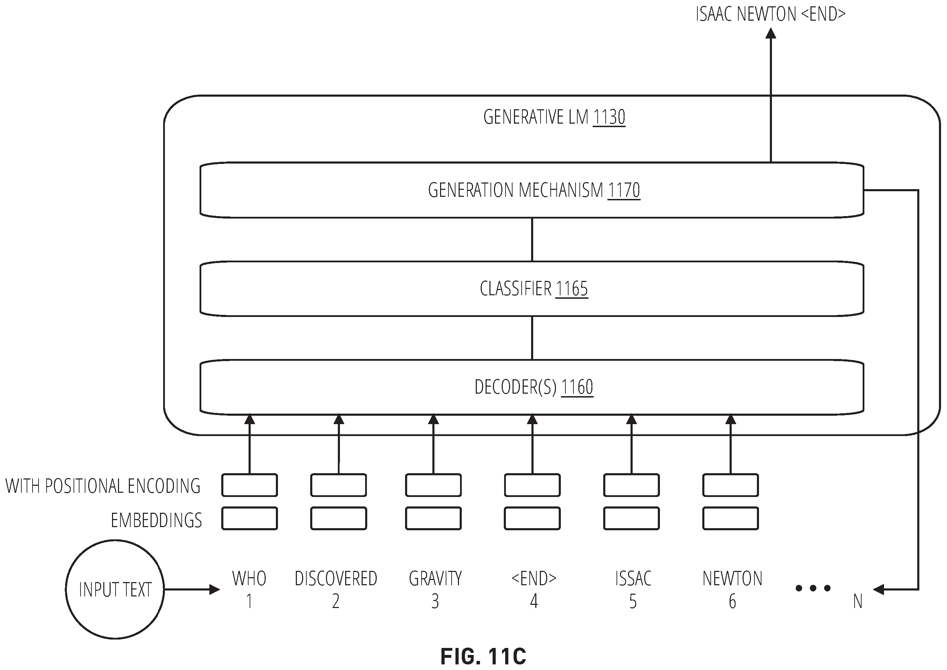

Threat modeling subsystem 102 can include one or more processors, such as central processing unit (CPU) 104 and/or graphics processing unit (GPU) 108, and memory 106. In some embodiments, threat modeling subsystem 102 can be a desktop computer, a server, a laptop, a mobile device, a processing device of a datacenter, and/or the like. CPU 104 and/or GPU 108 can be used to perform one or more operations (e.g., execute one or more programs or applications, including artificial intelligence (AI) and/or machine learning applications). For example, CPU 104 may perform operations to load one or more AI models (e.g., AI models 110) from memory 106 into GPU 108 and cause them to be executed by GPU 108. During execution of the AI models, CPU 104 may provide one or more inputs to the AI models and may receive one or more outputs from the AI models based on the provided inputs. In some embodiments, AI models 110 can include one or more generative AI models and one or more AI embedding models. Examples of possible AI models that can be executed by CPU 104 and/or GPU 108 are discussed in more detail in relation to FIG. 11A, FIG. 11B, and FIG. 11C.

Memory 106 can include at least one of a flash memory or a random access memory (RAM), such as dynamic RAM (DRAM) or synchronous DRAM (SDRAM). Memory 106 can store one or more AI models, such as model weights, coefficients, biases, etc., one or more model inputs, one or more model outputs, content items describing target subsystem 120 (e.g., content items 130), mitigation items, risk items, and/or the like.

In some embodiments, memory 106 can store outputs from an AI embedding model, such as encoded representations of a content item (e.g., content item 130) describing target subsystem 120. In some embodiments, AI embedding model outputs can be stored in datastore 112. Datastore 112 can include one or more data structures for storing information, such as a relational database, a document-based database, a vector store, and/or the like. Datastore 112 can store one or more encoded representations 114. For example, as will be discussed in more detail below, a content item describing target subsystem 120 may be provided to an AI embedding model. The AI embedding model may convert the content item to one or more encoded representations 114 within a latent embedding space. Datastore 112 can be "queried" to obtain textual representations of the encoded representations 114 that are related to the "query." For example, the query may be encoded within the latent embedding space, and any encoded representations 114 that are similar to the query (e.g., based on one or more similarity algorithms, such as cosine similarity) may be returned as a response to the query. In some embodiments, the response to the query is a textual representation of the encoded representations that are similar to the query.

Target subsystem 120 can be a subject of the threat modeling performed by threat modeling subsystem 102 using artificial intelligence. In some embodiments, target subsystem 120 can be connected to threat modeling subsystem 102 (e.g., via network 116). In some embodiments, target subsystem 120 may not exist yet. For example, target subsystem 120 may be described by one or more documents (e.g., content items 130) that describe the architecture of target subsystem 120 and the components that will exist within target subsystem 120, but target subsystem 120 may not have been built (e.g., connected, installed, configured, etc.) yet.

Target subsystem 120 can include one or more components which may be connected to one or more other components. For example, target subsystem 120 can include component A 122, connected to component B 124 and component C 126, and component D 128 connected to component C 126. In some embodiments, one or more components of target subsystem 120 may be connected via one or more networks (not shown).

In some embodiments, the subject of the threat modeling can be a component of a computer system. For example, threat modeling with artificial intelligence can be performed for a computer chip, a circuit board, cables, and/or the like.

Content items 130 can describe target subsystem 120 and its architecture. For example, content items 130 can include one or more design documents, data flow diagrams, system diagrams, visual representations of target subsystem 120's architecture, textual descriptions of target subsystem 120's architecture, and/or the like. In some embodiments, content items 130 may be created before target subsystem 120 is created. For example, content items 130 may include documents detailing plans to build target subsystem 120. In some cases, it can be advantageous to perform threat modeling of target subsystem 120 using artificial intelligence before spending time and resources to create target subsystem 120.

As an example, target subsystem 120 may be a system used in client-server interactions. Component A 122 may be a device (e.g., a computer, a server, a data center, etc.) providing a service. Component B 124 may be a database component connected to component A 122. Component C 126 may be a reverse proxy and/or load balancer that receives and routes requests to component A 122. Component D 128 may be a client device that makes requests to component C 126 (e.g., via a network (not shown)) to interact with the service provided by component A 122.

Threat modeling subsystem 102 may perform threat modeling of target subsystem 120 using artificial intelligence. As described below, threat modeling subsystem 102 may identify and analyze the various components of target subsystem 120 (e.g., component A 122, component B 124, component C 126, component D 128, etc.) and the connections between them using one or more AI models.

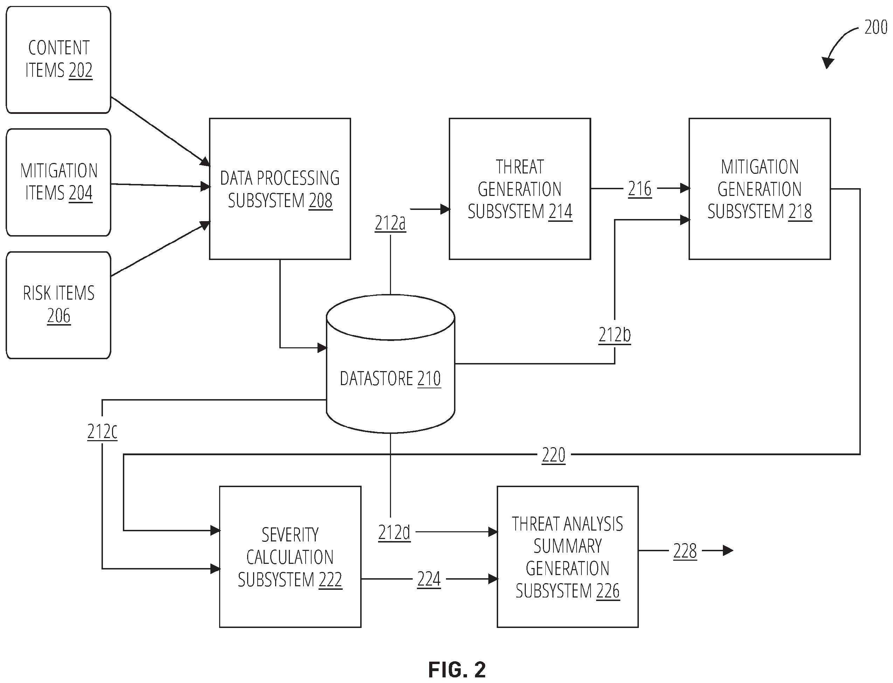

FIG. 2 is a block diagram of an example data flow 200 for threat modeling of a target system architecture with artificial intelligence, according to at least one embodiment. During threat modeling of a target system architecture with artificial intelligence, one or more items may be provided to data processing subsystem 208. The items may include content items 202, mitigation items 204, and/or risk items 206. Content items 202 can include textual descriptions and visual representations of the target system architecture. For example, content items 202 can include design documents, data flow diagrams, and/or other items that describe assets (e.g., components) of the target system and/or interactions between assets of the target system.

Mitigation items 204 can include items that describe mitigations that should be taken in response to particular threats. Mitigation items 204 can include known countermeasure documents, organization-specific policy documents, standardized control documents, and/or the like.

Risk items 206 can include items that describe the severity of particular threats. Risk items 206 can describe attacker efforts, resources, skills, and/or the like. Risk items 206 can describe the potential impact to the target system that would result if a particular threat is not mitigated. Risk items 206 can include historical threat models, standard guidelines, attacker effort estimations, threat impact estimates, and/or the like.

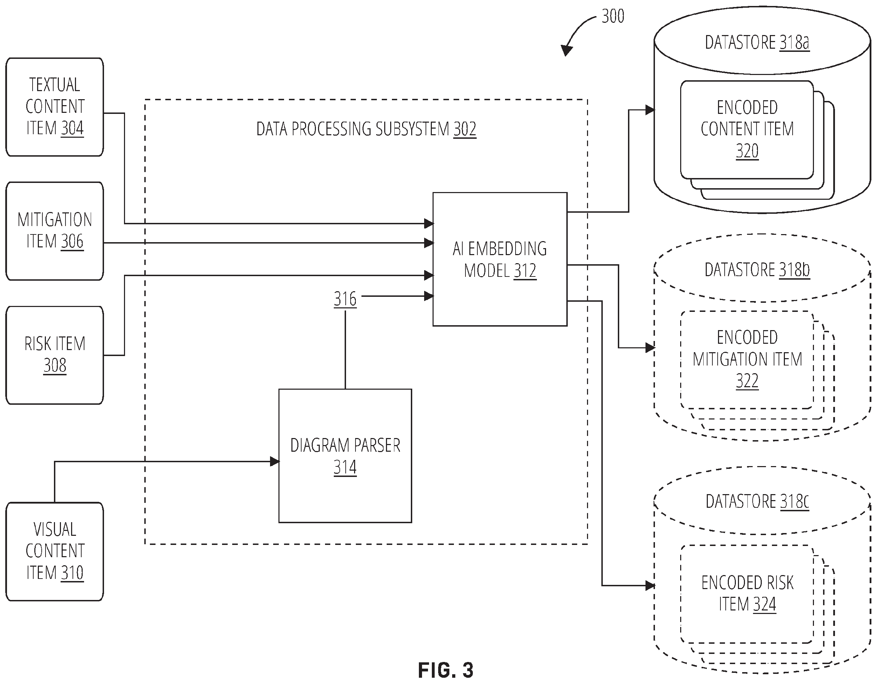

Content items 202, mitigation items 204, and risk items 206 may be provided to data processing subsystem 208, which can convert the items to encoded representations that can be stored in datastore 210, as will be described in more detail below with regard to FIG. 3.

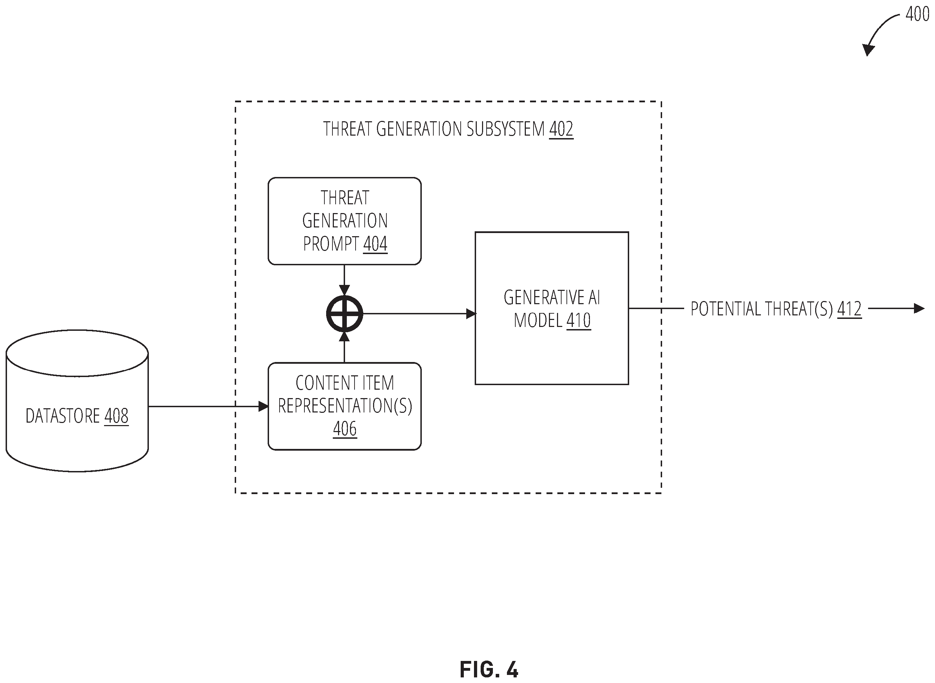

Content item representation(s) 212a from datastore 210 can be provided to threat generation subsystem 214, which can generate one or more potential threat(s) 216 based on the target system architecture, as will be described in more detail below with regard to FIG. 4.

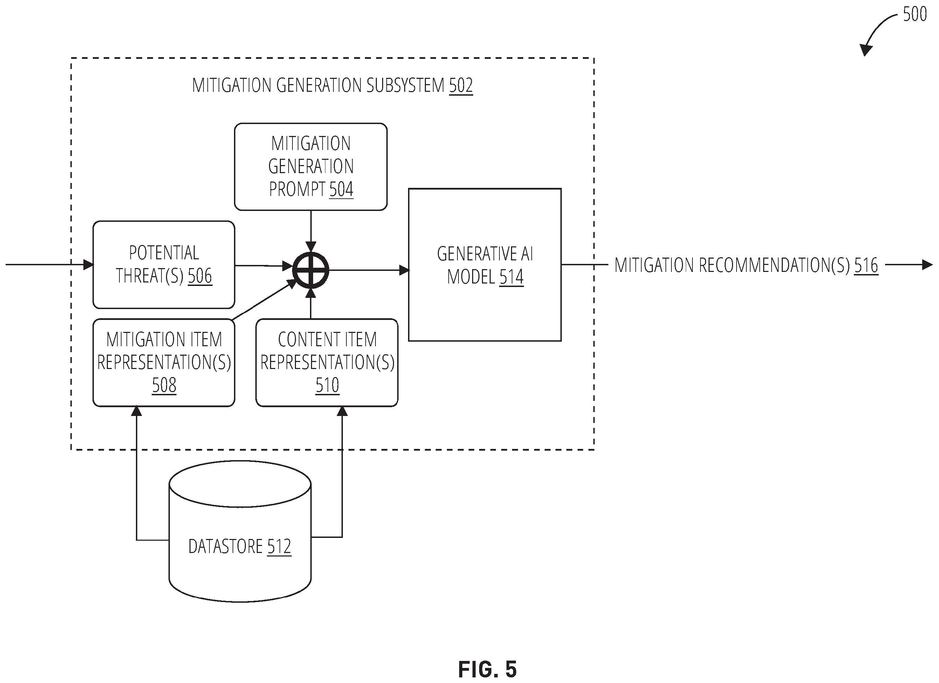

Potential threat(s) 216 and content item representation(s) 212b from datastore 210 can be provided to mitigation generation subsystem 218, which can generate one or more mitigation recommendation(s) 220 that can be performed to protect against potential threat(s) 216, as will be described in more detail below with regard to FIG. 5.

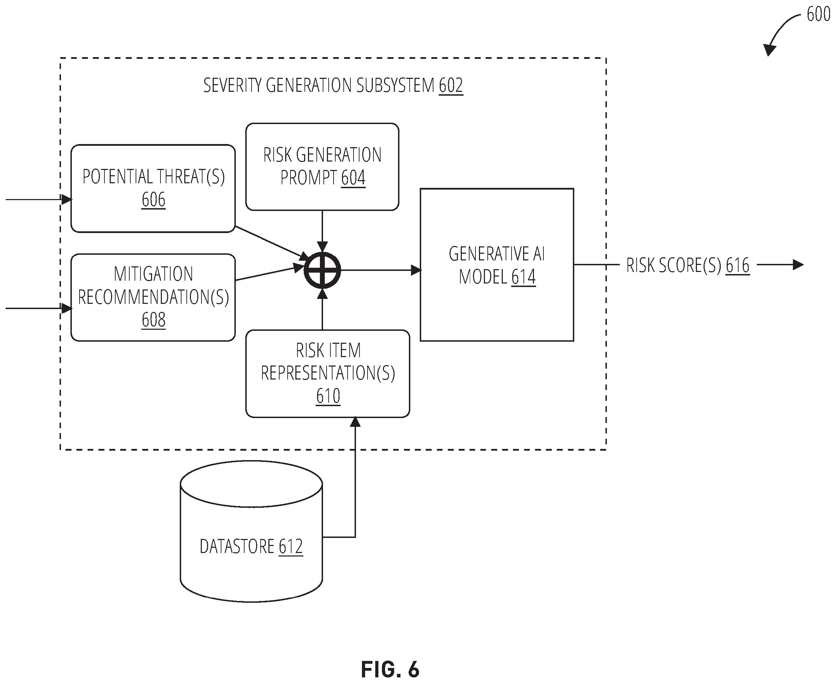

Mitigation recommendation(s) 220 and content item representation(s) 212c from datastore 210 can be provided to severity calculation subsystem 222, which can generate one or more risk score(s) 224 that indicate a severity of potential threat(s) 216 to the target system, as will be described in more detail below with regard to FIG. 6.

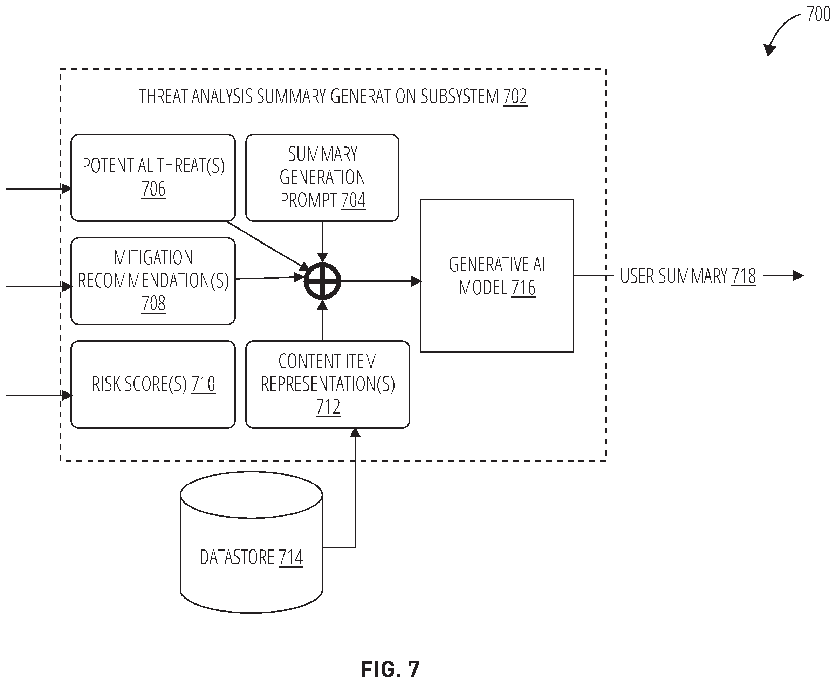

Risk score(s) 224 and content item representation(s) 212d from datastore 210 can be provided to threat analysis summary generation subsystem 226, which can generate user summary 228 that describes the target system architecture, potential threats to the target system (e.g., potential threat(s) 216), recommended mitigations to perform to protect the target system (e.g., mitigation recommendation(s) 220), and severities of the potential threats to the target system (e.g., risk score(s) 224), as will be described in more detail below with regard to FIG. 7.

FIG. 3 is a block diagram of an example data flow 300 for data processing as part of threat modeling of a target system architecture with artificial intelligence, according to at least one embodiment. Data processing subsystem 302 can receive one or more content items and encode them within a latent embedding space for later querying and/or retrieval. Data processing subsystem 302 can receive one or more text-based items, such as textual content item 304, mitigation item 306, and/or risk item 308. The text-based items can be provided to AI embedding model 312, which can include one or more AI models trained to convert text into encoded representations (e.g., vectors) within a latent embedding space. The output(s) of AI embedding model 312 can be stored in a datastore, such as datastore 318a, datastore 318b, or datastore 318c. In some embodiments, all outputs from AI embedding model 312 can be stored in the same datastore (e.g., datastore 318a). In some embodiments, outputs based on textual content item 304 (e.g., encoded content item 320) can be stored in a first datastore (e.g., datastore 318a), outputs based on mitigation item 306 (e.g., encoded mitigation item 322) can be stored in a second datastore (e.g., datastore 318b), and outputs based on risk item 308 (e.g., encoded risk item 324) can be stored in a third datastore.

In some embodiments, data processing subsystem 302 can include diagram parser 314. In some embodiments, diagram parser 314 is a program that parses one or more digital file formats that can encode a graphical representation of the target system architecture, such as visual content item 310. In some embodiments, diagram parser 314 is AI vision model. Diagram parser 314 can generate diagram parser output 316, which can include a textual description of the target system architecture depicted in the graphical representation (e.g., visual content item 310). Diagram parser output 316 can identify system assets (e.g., components) and connections between system assets.

In some embodiments, a user can provide a textual description of the system architecture or modify diagram parser output 316. Diagram parser output 316 can be provided to AI embedding model 312 with the other text-based items to obtain an encoded representation of visual content item 310. The encoded representation of visual content item 310 can be stored in a datastore, such as a datastore with an encoded representation of textual content item 304 (e.g., datastore 318a) or a datastore for storing encoded representations of visual content items (not shown).

In some embodiments, more than one AI embedding model can be used. For example, a first AI embedding model may be used to convert content items to the encoded representations within the latent embedding space, and a second AI embedding model may be used to convert mitigation items to the encoded representations within the same (or different) latent embedding space.

Datastore 318a, datastore 318b, and/or datastore 318c can include a database optimized for storing outputs from AI embedding model 312. For example, datastore 318a can include a vector store (e.g., an embedding datastore) optimized for storing high-dimensional vectors and performing operations on the stored vectors, such as similarity searches, nearest neighbor searches, and/or clustering.

FIG. 4 is a block diagram of an example data flow 400 for threat generation as part of threat modeling of a target system architecture with artificial intelligence, according to at least one embodiment. Threat generation subsystem 402 can generate one or more potential threats (e.g., potential threat(s) 412) to the target system architecture using one or more AI models (e.g., generative AI model 410) and based on the content items that describe the target system architecture.

Threat generation subsystem 402 can receive one or more content item representation(s) 406 from datastore 408 which can be used to generate input prompts for an AI model. For example, content item representation(s) 406 for a first asset of the target system architecture can be combined with threat generation prompt 404 to create a threat generation input prompt.

Content item representation(s) 406 can include a textual description of an asset of the target system architecture. The description may include information related to a connection between the asset and another asset of the target system architecture. For example, a first asset may be selected from the assets of the target system architecture. Datastore 408 can be queried to obtain information related to the selected asset. Datastore 408 may use a similarity algorithm, a nearest neighbor algorithm, a clustering algorithm, and/or the like to determine what encoded representations (e.g., generated using data processing subsystem 208 of FIG. 2) are most related to the selected asset. In some embodiments, the similarity algorithm, nearest neighbor algorithm, or clustering algorithm is performed using a vector store of datastore 408.

As an example, assuming the selected asset was a server component, datastore 408 can be queried for the server component and may provide, in response to the query, content item representation(s) 406 which can include a description of the server component of the target system architecture and a description of a connection between the server component and a database component of the target system architecture.

Threat generation prompt 404 can include text to prompt a generative AI model (e.g., generative AI model 410) to generate one or more potential threats that could affect particular assets of the target system architecture (e.g., the assets represented by content item representation(s) 406). Threat generation prompt 404 can include details to ensure the generated threats are complete and take into account the threat to the connection and the assets as well as its impact on the connection, the assets, other assets, and/or the overall system. In some embodiments, threat generation prompt 404 can include details to direct the AI model to generate the potential threats based on one or more threat assessment methodologies, such as CIA (Confidentiality, Integrity, and Availability) or STRIDE (Spoofing, Tampering, Repudiation, Information Disclosure, Denial of Service, and Elevation of Privilege).

The threat generation input prompt can be provided as an input to generative AI model 410, which can be an AI model trained to generate text based on a given input, such as a language model or large language model (LLM). In some embodiments, generative AI model 410 may include one or more transformer-based AI models. Generative AI model 410 may generate one or more potential threat(s) 412 that may affect the assets of the target system architecture represented by content item representation(s) 406.

After (or simultaneously with) generating potential threats for a first asset and/or connection of the target system architecture, a second threat generation input prompt may be created using threat generation prompt 404 and a second content item representation from datastore 408. The second content item representation may describe another asset of the target system architecture and/or a connection between the previous asset of the target system architecture with another target system architecture asset. For example, if the first content item representation described the server component and the connection between the server component and the database component of the target system architecture, the second content item representation may describe the server component and a connection between the server component and a client device of the target system architecture. Or, the second content item representation may describe the client device of the target system architecture and a connection between the client device and a load balancer of the target system architecture. A second set of potential threats may be generated based on the second threat generation input prompt.

This process may continue for each asset and/or connection of the target system architecture to obtain a set of potential threats that may affect any portion of the target system architecture.

FIG. 5 is a block diagram of an example data flow 500 for mitigation recommendation generation as part of threat modeling of a target system architecture with artificial intelligence, according to at least one embodiment. Mitigation generation subsystem 502 can generate one or more mitigation recommendations (e.g., mitigation recommendation(s) 516) based on the potential threats that were generated based on the target system architecture.

In some embodiments, mitigation generation subsystem 502 can generate mitigation recommendations as a two-step process: first, generating possible mitigations based on the potential threats and then second, generating mitigation recommendations based on the generated possible mitigations that have not already been implemented (as indicated by the target system architecture documentation/content items). In some embodiments, mitigation generation subsystem 502 generates the mitigation recommendations in a single step, combining the potential threats and target system architecture to generate mitigation recommendations without the intervening step of generating possible mitigations based on the potential threats alone.

For example, mitigation generation subsystem 502 can receive one or more potential threat(s) 506 (e.g., from threat generation subsystem 402 of FIG. 4). Potential threat(s) 506 can be combined with mitigation item representation(s) 508, content item representation(s) 510, and mitigation generation prompt 504 to generate a mitigation generation input prompt for an AI model.

Potential threat(s) 506 can include generated potential threats that target a particular asset and/or connection of the target system architecture. Content item representation(s) 510 can include a textual description of the asset and/or connection targeted by potential threat(s) 506. Datastore 512 may be queried to obtain the information related to the asset and/or connection targeted by potential threat(s) 506.

Mitigation item representation(s) 508 can include a textual description of known mitigations that can be performed for particular threats. For example, datastore 512 may contain mitigation information from one or more mitigation items that have previously been processed (e.g., using data processing subsystem 208 of FIG. 2). Datastore 512 may be queried based on potential threat(s) 506 to obtain mitigation information relevant to the potential threats.

Mitigation generation prompt 504 can include text to prompt a generative AI model (e.g., generative AI model 514) to generate one or more mitigation recommendation(s) 516 directed to potential threat(s) 506 based on mitigation item representation(s) 508 and content item representation(s) 510. Mitigation recommendation(s) 516 can include steps that can be performed to protect the assets and/or connections of the target system against potential threat(s) 506 and/or information describing that the potential threat has already been mitigated.

In some embodiments, mitigation recommendation(s) 516 can include additional information explaining why the potential threat is considered to be mitigated or not yet mitigated. For example, if the mitigation recommendation indicates the potential threat has already been mitigated, the mitigation recommendation may include one or more portions of content item representation(s) 510 that demonstrate the potential threat has been mitigated already. For example, the potential threat may involve a malicious actor snooping on network traffic between two devices. If the target system architecture (as indicated by content item representation(s) 510) is using encrypted communications (e.g., transport layer security (TLS)) between the two devices, the potential threat may be considered "mitigated," and the mitigation recommendation may include one or more portions of content item representation(s) 510 that indicate the target system architecture is using encrypted communications.

As another example, if the mitigation recommendation indicates the potential threat has not been mitigated, the mitigation recommendation may include one or more portions of content item representation(s) 510 that demonstrate why the potential threat is considered not mitigated. For example, the potential threat may involve a malicious actor snooping on network traffic between two devices. If the target system architecture (as indicated by content item representation(s) 510) is using unencrypted communications, the potential threat may be considered "not mitigated," and the mitigation recommendation may include one or more portions of content item representation(s) 510 that indicate the target system architecture is using unencrypted communications.

As another example, if the potential threat involves a malicious actor snooping on network traffic between two devices and content item representation(s) 510 does not include information about whether the communications are encrypted or not, the potential threat may be considered "not mitigated" (or "unknown"). The mitigation recommendation may include one or more portions of content item representation(s) 510 that discuss the communications between the two devices and text indicating that it is unclear whether the communications are encrypted or not.

After (or simultaneously with) generating mitigation recommendations for a first potential threat of the target system architecture, a second mitigation generation input prompt can be created using mitigation generation prompt 504 and a second potential threat with associated mitigation information and content item information from datastore 512. The second potential threat may be directed to another asset of the target system architecture, and datastore 512 may be queried for information related to that asset. Datastore 512 may also be queried for information related to the second potential threat.

This process may continue for each potential threat of the target system architecture to obtain a set of mitigation recommendations that can be implemented to protect against the set of generated potential threats.

FIG. 6 is a block diagram of an example data flow 600 for severity calculation as part of threat modeling of a target system architecture with artificial intelligence, according to at least one embodiment. Severity generation subsystem 602 can generate one or more risk scores (e.g., risk score(s) 616) based on the potential threats that were generated based on the target system architecture and based on the mitigation recommendations corresponding to the potential threats.

Severity generation subsystem 602 can receive one or more potential threat(s) 606 (e.g., from threat generation subsystem 402 of FIG. 4). Potential threat(s) 606 can be combined with mitigation recommendation(s) 608 (e.g., from mitigation generation subsystem 502 of FIG. 5), risk item representation(s) 610, and risk generation prompt 604 to generate a risk score generation input prompt for an AI model.

Potential threat(s) 606 can include generated potential threats that target a particular asset and/or connection of the target system architecture. Mitigation recommendation(s) 608 can include generated mitigation recommendation to protect against the generated potential threats that target the particular asset and/or connection of the target system architecture.

Risk item representation(s) 610 can include a textual description of the severity of the generated potential threat. For example, datastore 612 may contain severity information from one or more risk items that have previously been processed (e.g., using data processing subsystem 208 of FIG. 2). Datastore 612 may be queried based on potential threat(s) 606 to obtain severity information related to the potential threats. The severity information may be based on a historical threat model, a standard guideline, an attacker effort estimation, a threat impact estimate, and/or the like.

Risk generation prompt 604 can include text to prompt a generative AI model (e.g., generative AI model 614) to generate one or more risk score(s) 616 directed to potential threat(s) 606 based on risk item representation(s) 610. Risk score(s) 616 can indicate a severity of the impact to the target system that would occur if the potential threat occurred.

In some embodiments, severity generation subsystem 602 can generate risk score(s) 616 using one or more algorithms and without an AI model. For example, a risk score may be generated using an algorithm that combines multiple values that are determined based on the potential threat and the mitigation recommendations. The algorithm may assign positive (e.g., high) scores to threats based on a potential impact of the potential threat to the target system and negative (e.g., low) scores to threats that have already been mitigated or the like. Thus, a potential threat may have an impact score of 10, but if the potential threat has already been mitigated, the risk score may be 0 (e.g., impact score of 10 minus mitigation score of 10 = 0 overall risk score). In some embodiments, the values may have corresponding weighted coefficients.

In some embodiments, severity generation subsystem 602 can generate risk score(s) 616 using a risk matrix. The potential threat may be given a "likelihood" score indicating how likely it is that the threat occurs and an "impact score" indicating how much of an impact would result if the threat occurs. A risk score may be calculated based on a combination of the likelihood score and the impact score.

After (or simultaneously with) generating risk scores for a first potential threat of the target system architecture, a second risk score generation input prompt can be created using risk generation prompt 604 and a second potential threat with associated mitigation recommendations and risk item information from datastore 612. The second potential threat may be directed to another asset of the target system architecture. Datastore 612 may be queried for risk information related to the second potential threat.

This process may continue for each potential threat of the target system architecture to obtain a set of risk scores related to the target system architecture.

FIG. 7 is a block diagram of an example data flow 700 for threat analysis summary generation as part of threat modeling of a target system architecture with artificial intelligence, according to at least one embodiment. Threat analysis summary generation subsystem 702 can generate a user summary (e.g., user summary 718) based on the potential threats, mitigation recommendations, and risk scores that were generated based on the target system architecture.

Threat analysis summary generation subsystem 702 can receive one or more potential threat(s) 706 (e.g., from threat generation subsystem 402 of FIG. 4), one or more mitigation recommendation(s) 708 (e.g., from mitigation generation subsystem 502 of FIG. 5), and one or more risk score(s) 710 (e.g., from severity generation subsystem 602 of FIG. 6). These can be combined with summary generation prompt 704 and content item representation(s) 712 to generate a user summary generation input prompt for an AI model.

Potential threat(s) 706 can include generated potential threats that target a particular asset and/or connection of the target system architecture. Content item representation(s) 712 can include a textual description of the asset and/or connection targeted by potential threat(s) 706. Datastore 714 can be queried to obtain the information related to the asset and/or connection targeted by potential threat(s) 706.

Mitigation recommendation(s) 708 can include generated mitigation recommendations to protect against the generated potential threats that target the particular asset and/or connection of the target system architecture.

Risk score(s) 710 can include the generated severity scores that indicate an potential impact on the target system architecture if the potential threat were to occur.

Summary generation prompt 704 can include text to prompt a generative AI model (e.g., generative AI model 716) to summarize assets included in the target system architecture, the potential threats to the target system architecture, the mitigation recommendations to protect against the potential threats, and/or the risk scores (e.g., severity scores) associated with the potential threats. User summary 718 can include a human-readable summary of the threat modeling.

In some embodiments, user summary 718 can present a list of recommended mitigations that can be performed to protect the target system architecture. The recommended mitigations can be ordered based on the risk score associated with the mitigation's associated potential threat. For example, the recommended mitigations for potential threats with the highest risk scores may be included at the top (e.g., start) of user summary 718.

In some embodiments, a first user summary may be generated for a first potential threat with its associated mitigation recommendation(s) and risk score at a first time, and a second user summary may be generated for a second potential threat with its associated mitigation recommendation(s) and risk score at a later, second time. The first user summary and the second user summary can be combined based on the risk scores associated with each potential threat before being provided for display to a user (e.g., a user associated with the target system architecture).

In some embodiments, a user summary may be generated for a first potential threat with its associated mitigation recommendation(s) and risk score and a second potential threat with its associated mitigation recommendation(s) and risk score at the same time (e.g., after both the first potential threat and the second potential threat have gone through the threat modeling pipeline).

In the above discussion, it should be understood that, in some embodiments, the generative AI models described in relation to the various figures are the same generative AI model. In some embodiments, one or more generative AI models described in relation to the various figures may be different. For example, a first generative AI model may be trained and/or fine-tuned to generate potential threats and a second generative AI model may be trained and/or fine-tuned to generate mitigation recommendations.

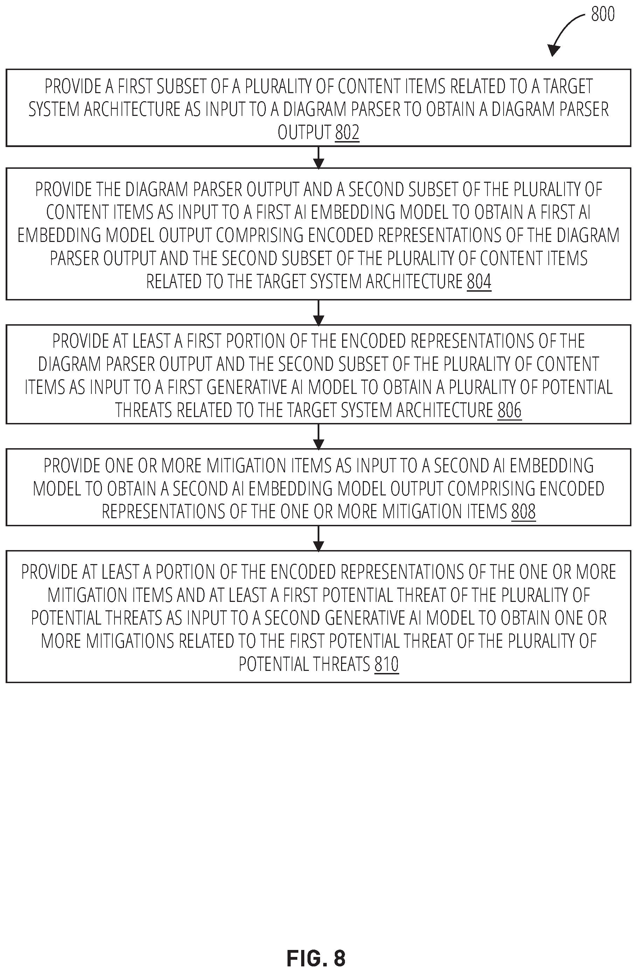

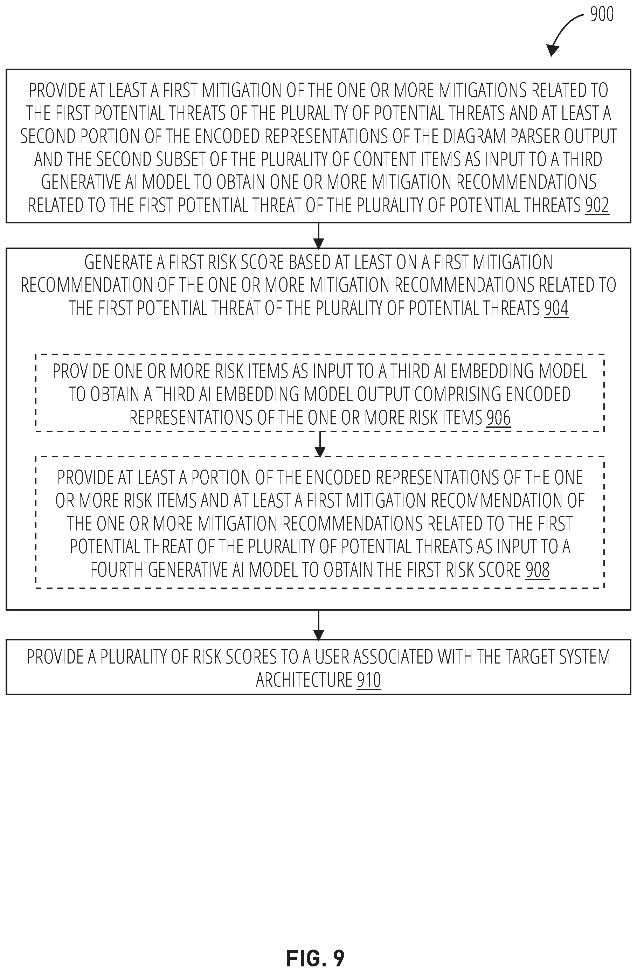

FIG. 8 is a flow diagram of an example method 800 for threat modeling with artificial intelligence, according to at least one embodiment. FIG. 9 is a flow diagram of an example method 900 for threat modeling with artificial intelligence, according to at least one embodiment.

Methods 800 and/or 900 can be performed using one or more processing units (e.g., CPUs, GPUs, accelerators, physics processing units (PPUs), data processing units (DPUs), etc.), which may include (or communicate with) one or more memory devices. In at least one embodiment, methods 800 and/or 900 can be performed using a processing device or processing devices. In at least one embodiment, methods 800 and/or 900 can be performed using processing units (e.g., CPU 104, GPU 108) of threat modeling subsystem 102 of FIG. 1. In at least one embodiment, processing units performing any of methods 800 and/or 900 can be executing instructions stored on a non-transient computer readable storage media. In at least one embodiment, any of methods 800 and/or 900 can be performed using multiple processing threads (e.g., CPU threads and/or GPU threads), individual threads executing one or more individual functions, routines, subroutines, or operations of the method. In at least one embodiment, processing threads implementing any of methods 800 and/or 900 can be synchronized (e.g., using semaphores, critical sections, and/or other thread synchronization mechanisms). Alternatively, processing threads implementing any of methods 800 and/or 900 can be executed asynchronously with respect to each other. Various operations of methods 800 and/or 900 can be performed in a different order compared with the order shown in FIG. 8 and/or FIG. 9. Some operations of any of methods 800 and/or 900 can be performed concurrently with other operations. In at least one embodiment, one or more operations shown in FIG. 8 and/or FIG. 9 may not always be performed.

FIG. 8 is a flow diagram of an example method 800 for threat modeling with artificial intelligence, according to at least one embodiment. At block 802, processing units executing method 800 can provide a first subset of a plurality of content items related to a target system architecture as input to a diagram parser to obtain a diagram parser output. In some embodiments, the diagram parser is an AI vision model trained to convert a graphical representation of a target system architecture into a textual description of the target system architecture. In some embodiments, the diagram parser is a program that parses one or more digital file formats that can encode a graphical representation of the system architecture. The diagram parser output can include a textual description of the system architecture identifying system assets and connections between the different system assets.

In some embodiments, the plurality of content items related to the target system architecture can include at least one of a visual representation of the target system architecture (e.g., a diagram of the target system architecture), a textual description of the target system architecture, a design document related to the target system architecture, a data flow diagram, and/or the like.

At block 804, processing units can provide the diagram parser output and a second subset of the plurality of content items related to the target system architecture as input to a first artificial intelligence (AI) embedding model to obtain a first AI embedding model output. The first AI embedding model output can include encoded representations of the diagram parser output and the second subset of the plurality of content items related to the target system architecture.

In some embodiments, processing units can store the first AI embedding model output in an embedding datastore of a memory accessible to the processing units.

At block 806, processing units can provide at least a first portion of the encoded representations of the diagram parser output and the second subset of the plurality of content items as input to a first generative AI model to obtain a plurality of potential threats related to the target system architecture.

In some embodiments, at block 808, processing units can provide one or more mitigation items as input to a second AI embedding model to obtain a second AI embedding model output. The second AI embedding model output can include encoded representations of the one or more mitigation items.

In some embodiments, the one or more mitigation items can include at least one of known countermeasure documents, organization-specific policy documents, standardized control documents, and/or the like.

In some embodiments, at block 810, processing units can provide at least a portion of the encoded representations of the one or more mitigation items and at least a first potential threat of the plurality of potential threats related to the target system architecture as input to a second generative AI model to obtain one or more mitigations related to the first potential threat of the plurality of potential threats.

FIG. 9 is a flow diagram of an example method 900 for threat modeling with artificial intelligence, according to at least one embodiment. In some embodiments, processing units may perform block 902 after performing block 810 of FIG. 8. At block 902, processing units executing method 900 can provide at least a first mitigation of the one or more mitigations related to the first potential threat of the plurality of threats and at least a second portion of the encoded representations of the diagram parser output and the second subset of the plurality of content items related to the target system architecture as input to a third generative AI model to obtain one or more mitigation recommendations related to the first potential threat of the plurality of potential threats.

At block 904, processing units can generate a first risk score based at least on a first mitigation recommendation of the one or more mitigation recommendations related to the first potential threat of the plurality of potential threats. In some embodiments, the first risk score is generated using one or more algorithms, such as an algorithm that provides positive (e.g., high) scores to threats based on a potential impact of the potential threat to the target system and negative (e.g., low) scores to threats that have already been mitigated or the like. For example, a potential threat may have an impact score of 10, but if the potential threat has already been mitigated, the risk score may be 0 (e.g., impact score of 10 minus mitigation score of 10 = 0 overall risk score). In some embodiments, the first risk score is generated according to block 906 and block 908.

At block 906, processing units can provide one or more risk items as input to a third AI embedding model to obtain a third AI embedding model output. The third AI embedding model output can include encoded representations of the one or more risk items.

In some embodiments, the one or more risk items can include at least one of a historical threat model, a standard guideline, an attacker effort estimation, a threat impact estimate, and/or the like.

At block 908, processing units can provide at least a portion of the encoded representations of the one or more risk items and at least a first mitigation recommendation of the one or more mitigation recommendations related to the first potential threat of the plurality of potential threats related to the target system architecture as input to a fourth generative AI model to obtain the first risk score.

At block 910, processing units can provide a plurality of risk scores to a user associated with the target system architecture. In some embodiments, the user is a developer of the target system architecture, an analyst of the target system architecture, an owner of the target system architecture, and/or the like. The plurality of risk scores can include the first risk score related to the potential threat associated with the first mitigation recommendation and one or more additional risk scores related to other potential threats associated with the target system architecture.

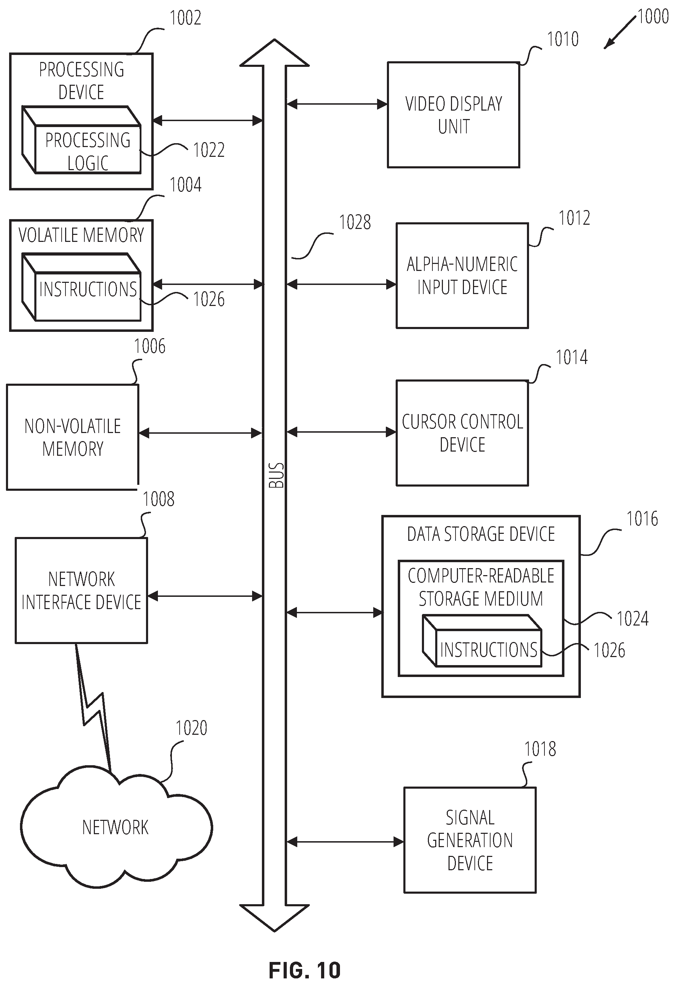

FIG. 10 is a block diagram illustrating an exemplary computer system, in accordance with at least one embodiment of the present disclosure. The computer system 1000 can correspond to threat modeling subsystem 102, described with respect to FIG. 1. In some embodiments, the computer system 1000 can also correspond to target subsystem 120 or one or more of the components of target subsystem 120, such as component A 122, component B 124, component C 126, and/or component D 128, described with respect to FIG. 1. Computer system 1000 can operate in the capacity of a server or an endpoint machine in an endpoint-server network environment, or as a peer machine in a peer-to-peer (or distributed) network environment. The machine can be a television, a personal computer (PC), a tablet PC, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 1000 includes a processing device (processor) 1002, a main memory 1004 (e.g., read-only memory (ROM), flash memory, dynamic random access memory (DRAM) such as synchronous DRAM (SDRAM), double data rate (DDR SDRAM), or DRAM (RDRAM), etc.), a static memory 1006 (e.g., flash memory, static random access memory (SRAM), etc.), and a data storage device 1016, which communicate with each other via a bus 1028.

Processor (processing device) 1002 represents one or more general-purpose processing devices such as a microprocessor, central processing unit, or the like, and may include processing logic 1022. More particularly, the processor 1002 can be a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor 1002 can also be one or more special-purpose processing devices such as an application specific integrated circuit (ASIC), a field programmable gate array (FPGA), a digital signal processor (DSP), network processor, or the like. The processor 1002 is configured to execute instructions 1026 (e.g., for generating threat indicator alerts) for performing the operations discussed herein.

The computer system 1000 can further include a network interface device 1008. The computer system 1000 also can include a video display unit 1010 (e.g., a liquid crystal display (LCD) or a cathode ray tube (CRT)), an input device 1012 (e.g., a keyboard, and alphanumeric keyboard, a motion sensing input device, touch screen), a cursor control device 1014 (e.g., a mouse), and a signal generation device 1018 (e.g., a speaker). In some embodiments, computer system 1000 may not include video display unit 1010, input device 1012, and/or cursor control device 1014 (e.g., in a headless configuration).

The data storage device 1016 can include a non-transitory machine-readable storage medium 1024 (also computer-readable storage medium) on which is stored one or more sets of instructions 1026 (e.g., for threat modeling with artificial intelligence) embodying any one or more of the methodologies or functions described herein. The instructions 1026 can also reside, completely or at least partially, within the main memory 1004 and/or within the processor 1002 during execution thereof by the computer system 1000, the main memory 1004 and the processor 1002 also constituting machine-readable storage media. The instructions can further be transmitted or received over a network 1020 via the network interface device 1008.

In one implementation, the instructions 1026 include instructions for threat modeling with artificial intelligence. While the computer-readable storage medium 1024 (machine-readable storage medium) is shown in an exemplary implementation to be a single medium, the terms "computer-readable storage medium" and "machine-readable storage medium" should be taken to include a single medium or multiple media (e.g., a centralized or distributed database, and/or associated caches and servers) that store the one or more sets of instructions. The terms "computer-readable storage medium" and "machine-readable storage medium" shall also be taken to include any medium that is capable of storing, encoding or carrying a set of instructions for execution by the machine and that cause the machine to perform any one or more of the methodologies of the present disclosure. The terms "computer-readable storage medium" and "machine-readable storage medium" shall accordingly be taken to include, but not be limited to, solid-state memories, optical media, and magnetic media.

In at least some embodiments, language models, such as large language models (LLMs) and/or other types of generative artificial intelligence (AI) may be implemented. These models may be capable of understanding, summarizing, translating, and/or otherwise generating text (e.g., natural language text, code, etc.), images, video, computer aided design (CAD) assets, omniverse and/or metaverse file information (e.g., in USD format), and/or the like, based on the context provided in input prompts or queries. These language models may be considered "large," in embodiments, based on the models being trained on massive datasets and having architectures with large number of learnable network parameters (weights and biases) - such as millions or billions of parameters. The LLMs/VLMs/etc. may be implemented for summarizing textual data, analyzing and extracting insights from data (e.g., textual, image, video, etc.), and generating new text/image/video/etc. in user-specified styles, tones, and/or formats. The LLMs of the present disclosure may be used exclusively for text processing, in embodiments, whereas in other embodiments, multimodal LLMs may be implemented to accept, understand, and/or generate text along with other types of content like images, audio, and/or video. For example, vision language models (VLMs), or more generally multimodal language models, may be implemented to accept image, video, audio, textual, 3D design (e.g., CAD), and/or other inputs data types and/or to generate or output image, video, audio, textual, 3D design, and/or other output data types.

Various types of LLM/VLM/etc. architectures may be implemented in various embodiments. For example, different architectures may be implemented that use different techniques for understanding and generating outputs - such as text, audio, video, image, etc. In some embodiments, LLM architectures such as recurrent neural networks (RNNs) or long short-term memory networks (LSTMs) may be used, while in other embodiments transformer architectures - such as those that rely on self-attention mechanisms - may be used to understand and recognize relationships between words or tokens. One or more generative processing pipelines that include LLMs may also include one or more diffusion block(s) (e.g., denoisers). The language models of the present disclosure may include encoder and/or decoder block(s). For example, discriminative or encoder-only LLMs like BERT (Bidirectional Encoder Representations from Transformers) may be implemented for tasks that involve language comprehension such as classification, sentiment analysis, question answering, and named entity recognition. As another example, generative or decoder-only LLMs like GPT (Generative Pretrained Transformer) may be implemented for tasks that involve language and content generation such as text completion, story generation, and dialogue generation. LLMs that include both encoder and decoder components like T5 (Text-to-Text Transformer) may be implemented to understand and generate content, such as for translation and summarization. These examples are not intended to be limiting, and any architecture type - including but not limited to those described herein - may be implemented depending on the particular embodiment and the task(s) being performed using the model(s).

In various embodiments, the LLMs/VLMs/etc. may be trained using unsupervised learning, in which an LLM learns patterns from large amounts of unlabeled text/audio/video/image/etc. data. Due to the extensive training, in embodiments, the models may not require task-specific or domain-specific training. LLMs that have undergone extensive pre-training on vast amounts of unlabeled text data may be referred to as foundation models and may be adept at a variety of tasks like question-answering, summarization, filling in missing information, and translation. Some LLMs may be tailored for a specific use case using techniques like prompt tuning, fine-tuning, retrieval augmented generation (RAG), adding adapters (e.g., customized neural networks, and/or neural network layers, that tune or adjust prompts or tokens to bias the language model toward a particular task or domain), and/or using other fine-tuning or tailoring techniques that optimize the models for use on particular tasks and/or within particular domains.

In some embodiments, the LLMs/VLMs/etc. of the present disclosure may be implemented using various model alignment techniques. For example, in some embodiments, guardrails may be implemented to identify improper or undesired inputs (e.g., prompts) and/or outputs of the models. In some non-limiting embodiments, the guardrails implemented may be similar to those described in U.S. Pat. App. No. 18,304,341, filed on April 20, 2023, the contents of which are hereby incorporated by reference in their entirety. In some embodiments, one or more additional models - or layers thereof - may be implemented to identify issues with inputs and/or outputs of the models. For example, these "safeguard" models may be trained to identify inputs and/or outputs that are "safe" or otherwise okay or desired and/or that are "unsafe" or are otherwise undesired for the particular application/implementation. As a result, the LLMs/VLMs/etc. of the present disclosure may be less likely to output language/text/audio/etc. that may be offensive, vulgar, improper, unsafe, out of domain, and/or otherwise undesired for the particular application/implementation.

In some embodiments, the LLMs/VLMs/etc. may be configured to or capable of accessing or using one or more plug-ins, application programming interfaces (APIs), databases, data stores, repositories, etc. For example, for certain tasks or operations that the model is not ideally suited for, the model may have instructions (e.g., as a result of training, and/or based on instructions in a given prompt) to access one or more plug-ins (e.g., 3^{rd} party plugins) for help in processing the current input. In such an example, where at least part of a prompt is related to restaurants or weather, the model may access one or more restaurant or weather plug-ins (e.g., via one or more APIs) to retrieve the relevant information. As another example, where at least part of a response requires a mathematical computation, the model may access one or more math plug-ins or APIs for help in solving the problem(s), and may then use the response from the plug-in and/or API in the output from the model. This process may be repeated - e.g., recursively - for any number of iterations and using any number of plug-ins and/or APIs until a response to the input prompt can be generated that addresses each ask/question/request/process/operation/etc. As such, the model(s) may not only rely on its own knowledge from training on a large dataset(s), but also on the expertise or optimized nature of one or more external resources - such as APIs, plug-ins, and/or the like.

In some embodiments, multiple language models (e.g., LLMs/VLMs/etc., multiple instances of the same language model, and/or multiple prompts provided to the same language model or instance of the same language model may be implemented, executed, or accessed (e.g., using one or more plug-ins, user interfaces, APIs, databases, data stores, repositories, etc.) to provide output responsive to the same query, or responsive to separate portions of a query. In at least one embodiment, multiple language models e.g., language models with different architectures, language models trained on different (e.g. updated) corpuses of data may be provided with the same input query and prompt (e.g., set of constraints, conditioners, etc.). In one or more embodiments, the language models may be different versions of the same foundation model. In one or more embodiments, at least one language model may be instantiated as multiple agents - e.g., more than one prompt may be provided to constrain, direct, or otherwise influence a style, a content, or a character, etc., of the output provided. In one or more example, non-limiting embodiments, the same language model may be asked to provide output corresponding to a different role, perspective, character, or having a different base of knowledge, etc. - as defined by a supplied prompt.

In any one of such embodiments, the output of two or more (e.g., each) language models, two or more versions of at least one language model, two or more instanced agents of at least one language model, and/or two more prompts provided to at least one language model may be further processed, e.g., aggregated, compared or filtered against, or used to determine (and provide) a consensus response. In one or more embodiments, the output from one language model - or version, instance, or agent - maybe be provided as input to another language model for further processing and/or validation. In one or more embodiments, a language model may be asked to generate or otherwise obtain an output with respect to an input source material, with the output being associated with the input source material. Such an association may include, for example, the generation of a caption or portion of text that is embedded (e.g., as metadata) with an input source text or image. In one or more embodiments, an output of a language model may be used to determine the validity of an input source material for further processing, or inclusion in a dataset. For example, a language model may be used to assess the presence (or absence) of a target word in a portion of text or an object in an image, with the text or image being annotated to note such presence (or lack thereof). Alternatively, the determination from the language model may be used to determine whether the source material should be included in a curated dataset, for example and without limitation.

FIG. 11A is a block diagram of an example generative language model system 1100 suitable for use in implementing at least some embodiments of the present disclosure. In the example illustrated in FIG. 11A, the generative language model system 1100 includes a retrieval augmented generation (RAG) component 1182, an input processor 1105, a tokenizer 1110, an embedding component 1120, plug-ins/APIs 1185, and a generative language model (LM) 1130 (which may include an LLM, a VLM, a multi-modal LM, etc.).

At a high level, the input processor 1105 may receive an input 1101 comprising text and/or other types of input data (e.g., audio data, video data, image data, sensor data (e.g., LiDAR, RADAR, ultrasonic, etc.), 3D design data, CAD data, universal scene descriptor (USD) data, etc.), depending on the architecture of the generative LM 1130. In some embodiments, the input 1101 includes plain text in the form of one or more sentences, paragraphs, and/or documents. Additionally or alternatively, the input 1101 may include numerical sequences, precomputed embeddings (e.g., word or sentence embeddings), and/or structured data (e.g., in tabular formats, JSON, or XML). In some implementations in which the generative LM 1130 is capable of processing multimodal inputs, the input 1101 may combine text with image data, audio data, and/or other types of input data, such as but not limited to those described herein. Taking raw input text as an example, the input processor 1105 may prepare raw input text in various ways. For example, the input processor 1105 may perform various types of text filtering to remove noise (e.g., special characters, punctuation, HTML tags, stopwords) from relevant textual content. In an example involving stopwords (common words that tend to carry little semantic meaning), the input processor 1105 may remove stopwords to reduce noise and focus the generative LM 1130 on more meaningful content. The input processor 1105 may apply text normalization, for example, by converting all characters to lowercase, removing accents, and/or or handling special cases like contractions or abbreviations to ensure consistency. These are just a few examples, and other types of input processing may be applied.

In some embodiments, a RAG component 1182 may be used to retrieve additional information to be used as part of the input 1101 or prompt. For example, in some embodiments, the input 1101 may be generated using the query or input to the model (e.g., a question, a request, etc.) in addition to data retrieved using the RAG component 1182. In some embodiments, the input processor 1105 may analyze the input 1101 and communicate with the RAG component 1182 (or the RAG component 1182 may be part of the input processor 1105, in embodiments) in order to identify relevant text and/or other data to provide to the generative LM 1130 as additional context or sources of information from which to identify the response, answer, or output 1180, generally. For example, where the input indicates that the user is interested in a desired tire pressure for a particular make and model of vehicle, the RAG component 1182 may retrieve - using a vector search in an embedding space, for example - the tire pressure information or the text corresponding thereto from a digital (embedded) version of the user manual for that particular vehicle make and model. Similarly, where a user revisits a chatbot related to a particular product offering or service, the RAG component 1182 may retrieve a prior stored conversation history - or at least a summary thereof - and include the prior conversation history along with the current ask/request as part of the input 1101 to the generative LM 1130.

The tokenizer 1110 may segment the (e.g., processed) text into smaller units (tokens) for subsequent analysis and processing. The tokens may represent individual words, subwords, characters, etc., depending on the implementation. Word-based tokenization divides the text into individual words, treating each word as a separate token. Subword tokenization breaks down words into smaller meaningful units (e.g., prefixes, suffixes, stems), enabling the generative LM 1130 to understand morphological variations and handle out-of-vocabulary words more effectively. Character-based tokenization represents each character as a separate token, enabling the generative LM 1130 to process text at a fine-grained level. The choice of tokenization strategy may depend on factors such as the language being processed, the task at hand, and/or characteristics of the training dataset. As such, the tokenizer 1110 may convert the (e.g., processed) text into a structured format according to tokenization schema being implemented in the particular embodiment.

The embedding component 1120 may use any known embedding technique to transform discrete tokens into (e.g., dense, continuous vector) representations of semantic meaning. For example, the embedding component 1120 may use pre-trained word embeddings (e.g., Word2Vec, GloVe, or FastText), one-hot encoding, Term Frequency-Inverse Document Frequency (TF-IDF) encoding, one or more embedding layers of a neural network, and/or otherwise.

In some implementations in which the input 1101 includes image data, the input processor 1105 may resize the image data to a standard size compatible with format of a corresponding input channel and/or may normalize pixel values to a common range (e.g., 0 to 1) to ensure a consistent representation, and the embedding component 1120 may encode the image data using any known technique (e.g., using one or more convolutional neural networks (CNNs) to extract visual features). In some implementations in which the input 1101 includes audio data, the input processor 1105 may resample an audio file to a consistent sampling rate for uniform processing, and the embedding component 1120 may use any known technique to extract and encode audio features - such as in the form of a spectrogram (e.g., a mel-spectrogram). In some implementations in which the input 1101 includes video data, the input processor 1105 may extract frames or apply resizing to extracted frames, and the embedding component 1120 may extract features such as optical flow embeddings or video embeddings and/or may encode temporal information or sequences of frames. In some implementations in which the input 1101 includes multimodal data, the embedding component 1120 may fuse representations of the different types of data (e.g., text, image, audio) using techniques like early fusion (concatenation), late fusion (sequential processing), attention-based fusion, etc.

The generative LM 1130 and/or other components of the generative language model system 1100 may use different types of neural network architectures depending on the implementation. For example, transformer-based architectures such as those used in models like GPT may be implemented, and may include self-attention mechanisms that weigh the importance of different words or tokens in the input sequence and/or feedforward networks that process the output of the self-attention layers, applying non-linear transformations to the input representations and extracting higher-level features. Some non-limiting example architectures include transformers (e.g., encoder-decoder, decoder only, multimodal), RNNs, LSTMs, fusion models, diffusion models, cross-modal embedding models that learn joint embedding spaces, graph neural networks (GNNs), hybrid architectures combining different types of architectures adversarial networks like generative adversarial networks or GANs or adversarial autoencoders (AAEs) for joint distribution learning, and others. As such, depending on the implementation and architecture, the embedding component 1120 may apply an encoded representation of the input 1101 to the generative LM 1130, and the generative LM 1130 may process the encoded representation of the input 1101 to generate an output 1180, which may include responsive text and/or other types of data.

As described herein, in some embodiments, the generative LM 1130 may be configured to access or use - or capable of accessing or using - plug-ins/APIs 1185 (which may include one or more plug-ins, application programming interfaces (APIs), databases, data stores, repositories, etc.). For example, for certain tasks or operations that the generative LM 1130 is not ideally suited for, the model may have instructions (e.g., as a result of training, and/or based on instructions in a given prompt, such as those retrieved using the RAG component 1182) to access one or more plug-ins/APIs 1185 (e.g., 3^{rd} party plugins) for help in processing the current input. In such an example, where at least part of a prompt is related to restaurants or weather, the model may access one or more restaurant or weather plug-ins (e.g., via one or more APIs), send at least a portion of the prompt related to the particular plug-ins/APIs 1185 to the plug-ins/APIs 1185, the plug-ins/APIs 1185 may process the information and return an answer to the generative LM 1130, and the generative LM 1130 may use the response to generate the output 1180. This process may be repeated - e.g., recursively - for any number of iterations and using any number of plug-ins/APIs 1185 until an output 1180 that addresses each ask/question/request/process/operation/etc. from the input 1101 can be generated. As such, the model(s) may not only rely on its own knowledge from training on a large dataset(s) and/or from data retrieved using the RAG component 1182, but also on the expertise or optimized nature of one or more external resources - such as the plug-ins/APIs 1185.

FIG. 11B is a block diagram of an example implementation in which the generative LM 1130 includes a transformer encoder-decoder. For example, assume input text such as "Who discovered gravity" is tokenized (e.g., by the tokenizer 1110 of FIG. 11A) into tokens such as words, and each token is encoded (e.g., by the embedding component 1120 of FIG. 11A) into a corresponding embedding (e.g., of size 512). Since these token embeddings typically do not represent the position of the token in the input sequence, any known technique may be used to add a positional encoding to each token embedding to encode the sequential relationships and context of the tokens in the input sequence. As such, the (e.g., resulting) embeddings may be applied to one or more encoder(s) 1135 of the generative LM 1130.

In an example implementation, the encoder(s) 1135 forms an encoder stack, where each encoder includes a self-attention layer and a feedforward network. In an example transformer architecture, each token (e.g., word) flows through a separate path. As such, each encoder may accept a sequence of vectors, passing each vector through the self-attention layer, then the feedforward network, and then upwards to the next encoder in the stack. Any known self-attention technique may be used. For example, to calculate a self-attention score for each token (word), a query vector, a key vector, and a value vector may be created for each token, a self-attention score may be calculated for pairs of tokens by taking the dot product of the query vector with the corresponding key vectors, normalizing the resulting scores, multiplying by corresponding value vectors, and summing weighted value vectors. The encoder may apply multi-headed attention in which the attention mechanism is applied multiple times in parallel with different learned weight matrices. Any number of encoders may be cascaded to generate a context vector encoding the input. An attention projection layer 1140 may convert the context vector into attention vectors (keys and values) for the decoder(s) 1145.

In an example implementation, the decoder(s) 1145 form a decoder stack, where each decoder includes a self-attention layer, an encoder-decoder self-attention layer that uses the attention vectors (keys and values) from the encoder to focus on relevant parts of the input sequence, and a feedforward network. As with the encoder(s) 1135, in an example transformer architecture, each token (e.g., word) flows through a separate path in the decoder(s) 1145. During a first pass, the decoder(s) 1145, a classifier 1150, and a generation mechanism 1155 may generate a first token, and the generation mechanism 1155 may apply the generated token as an input during a second pass. The process may repeat in a loop, successively generating and adding tokens (e.g., words) to the output from the preceding pass and applying the token embeddings of the composite sequence with positional encodings as an input to the decoder(s) 1145 during a subsequent pass, sequentially generating one token at a time (known as auto-regression) until predicting a symbol or token that represents the end of the response. Within each decoder, the self-attention layer is typically constrained to attend only to preceding positions in the output sequence by applying a masking technique (e.g., setting future positions to negative infinity) before the softmax operation. In an example implementation, the encoder-decoder attention layer operates similarly to the (e.g., multi-headed) self-attention in the encoder(s) 1135, except that it creates its queries from the layer below it and takes the keys and values (e.g., matrix) from the output of the encoder(s) 1135.

As such, the decoder(s) 1145 may output some decoded (e.g., vector) representation of the input being applied during a particular pass. The classifier 1150 may include a multi-class classifier comprising one or more neural network layers that project the decoded (e.g., vector) representation into a corresponding dimensionality (e.g., one dimension for each supported word or token in the output vocabulary) and a softmax operation that converts logits to probabilities. As such, the generation mechanism 1155 may select or sample a word or token based on a corresponding predicted probability (e.g., select the word with the highest predicted probability) and append it to the output from a previous pass, generating each word or token sequentially. The generation mechanism 1155 may repeat the process, triggering successive decoder inputs and corresponding predictions until selecting or sampling a symbol or token that represents the end of the response, at which point, the generation mechanism 1155 may output the generated response.

FIG. 11C is a block diagram of an example implementation in which the generative LM 1130 includes a decoder-only transformer architecture. For example, the decoder(s) 1160 of FIG. 11C may operate similarly as the decoder(s) 1145 of FIG. 11B except each of the decoder(s) 1160 of FIG. 11C omits the encoder-decoder self-attention layer (since there is no encoder in this implementation). As such, the decoder(s) 1160 may form a decoder stack, where each decoder includes a self-attention layer and a feedforward network. Furthermore, instead of encoding the input sequence, a symbol or token representing the end of the input sequence (or the beginning of the output sequence) may be appended to the input sequence, and the resulting sequence (e.g., corresponding embeddings with positional encodings) may be applied to the decoder(s) 1160. As with the decoder(s) 1145 of FIG. 11B, each token (e.g., word) may flow through a separate path in the decoder(s) 1160, and the decoder(s) 1160, a classifier 1165, and a generation mechanism 1170 may use auto-regression to sequentially generate one token at a time until predicting a symbol or token that represents the end of the response. The classifier 1165 and the generation mechanism 1170 may operate similarly as the classifier 1150 and the generation mechanism 1155 of FIG. 11B, with the generation mechanism 1170 selecting or sampling each successive output token based on a corresponding predicted probability and appending it to the output from a previous pass, generating each token sequentially until selecting or sampling a symbol or token that represents the end of the response. These and other architectures described herein are meant simply as examples, and other suitable architectures may be implemented within the scope of the present disclosure.

Other variations are within the spirit of present disclosure. Thus, while disclosed techniques are susceptible to various modifications and alternative constructions, certain illustrated embodiments thereof are shown in drawings and have been described above in detail. It should be understood, however, that there is no intention to limit disclosure to specific form or forms disclosed, but on contrary, intention is to cover all modifications, alternative constructions, and equivalents falling within spirit and scope of disclosure, as defined in appended claims.

Use of terms "a" and "an" and "the" and similar referents in context of describing disclosed embodiments (especially in context of following claims) are to be construed to cover both singular and plural, unless otherwise indicated herein or clearly contradicted by context, and not as a definition of a term. Terms "comprising," "having," "including," and "containing" are to be construed as open-ended terms (meaning "including, but not limited to,") unless otherwise noted. "Connected," when unmodified and referring to physical connections, is to be construed as partly or wholly contained within, attached to, or joined together, even if there is something intervening. Recitation of ranges of values herein are merely intended to serve as a shorthand method of referring individually to each separate value falling within range, unless otherwise indicated herein and each separate value is incorporated into specification as if it were individually recited herein. In at least one embodiment, use of the term "set" (e.g., "a set of items") or "subset" unless otherwise noted or contradicted by context, is to be construed as a nonempty collection comprising one or more members. Further, unless otherwise noted or contradicted by context, the term "subset" of a corresponding set does not necessarily denote a proper subset of the corresponding set, but subset and corresponding set may be equal.

Conjunctive language, such as phrases of form "at least one of A, B, and C," or "at least one of A, B and C," unless specifically stated otherwise or otherwise clearly contradicted by context, is otherwise understood with context as used in general to present that an item, term, etc., may be either A or B or C, or any nonempty subset of set of A and B and C. For instance, in illustrative example of a set having three members, conjunctive phrases "at least one of A, B, and C" and "at least one of A, B and C" refer to any of following sets: {A}, {B}, {C}, {A, B}, {A, C}, {B, C}, {A, B, C}. Thus, such conjunctive language is not generally intended to imply that certain embodiments require at least one of A, at least one of B and at least one of C each to be present. In addition, unless otherwise noted or contradicted by context, the term "plurality" indicates a state of being plural (e.g., "a plurality of items" indicates multiple items). In at least one embodiment, a number of items in a plurality is at least two but can be more when so indicated either explicitly or by context. Further, unless stated otherwise or otherwise clear from context, the phrase "based on" means "based at least in part on" or "based at least on" and not "based solely on."

Operations of processes described herein can be performed in any suitable order unless otherwise indicated herein or otherwise clearly contradicted by context. In at least one embodiment, a process such as those processes described herein (or variations and/or combinations thereof) is performed under control of one or more computer systems configured with executable instructions and is implemented as code (e.g., executable instructions, one or more computer programs or one or more applications) executing collectively on one or more processors, by hardware or combinations thereof. In at least one embodiment, code is stored on a computer-readable storage medium, for example, in the form of a computer program comprising a plurality of instructions executable by one or more processors. In at least one embodiment, a computer-readable storage medium is a non-transitory computer-readable storage medium that excludes transitory signals (e.g., a propagating transient electric or electromagnetic transmission) but includes non-transitory data storage circuitry (e.g., buffers, cache, and queues) within transceivers of transitory signals. In at least one embodiment, code (e.g., executable code or source code) is stored on a set of one or more non-transitory computer-readable storage media having stored thereon executable instructions (or other memory to store executable instructions) that, when executed (i.e., as a result of being executed) by one or more processors of a computer system, cause computer system to perform operations described herein. In at least one embodiment, set of non-transitory computer-readable storage media comprises multiple non-transitory computer-readable storage media and one or more of individual non-transitory storage media of multiple non-transitory computer-readable storage media lack all of code while multiple non-transitory computer-readable storage media collectively store all of code. In at least one embodiment, executable instructions are executed such that different instructions are executed by different processors - for example, a non-transitory computer-readable storage medium store instructions and a main central processing unit ("CPU") executes some of instructions while a graphics processing unit ("GPU") executes other instructions. In at least one embodiment, different components of a computer system have separate processors and different processors execute different subsets of instructions.

Accordingly, in at least one embodiment, computer systems are configured to implement one or more services that singly or collectively perform operations of processes described herein and such computer systems are configured with applicable hardware and/or software that enable performance of operations. Further, a computer system that implements at least one embodiment of present disclosure is a single device and, in another embodiment, is a distributed computer system comprising multiple devices that operate differently such that distributed computer system performs operations described herein and such that a single device does not perform all operations.

Use of any and all examples, or exemplary language (e.g., "such as") provided herein, is intended merely to better illuminate embodiments of disclosure and does not pose a limitation on scope of disclosure unless otherwise claimed. No language in specification should be construed as indicating any non-claimed element as essential to practice of disclosure.

All references, including publications, patent applications, and patents, cited herein are hereby incorporated by reference to the same extent as if each reference were individually and specifically indicated to be incorporated by reference and were set forth in its entirety herein.

In description and claims, terms "coupled" and "connected," along with their derivatives, may be used. It should be understood that these terms may be not intended as synonyms for each other. Rather, in particular examples, "connected" or "coupled" may be used to indicate that two or more elements are in direct or indirect physical or electrical contact with each other. "Coupled" may also mean that two or more elements are not in direct contact with each other, but yet still co-operate or interact with each other.

Unless specifically stated otherwise, in some embodiments, it may be appreciated that throughout specification terms such as "processing," "computing," "calculating," "determining," or like, refer to action and/or processes of a computer or computing system, or similar electronic computing device, that manipulate and/or transform data represented as physical, such as electronic, quantities within computing system's registers and/or memories into other data similarly represented as physical quantities within computing system's memories, registers or other such information storage, transmission or display devices.

In a similar manner, the term "processor" may refer to any device or portion of a device that processes electronic data from registers and/or memory and transforms that electronic data into other electronic data that may be stored in registers and/or memory. As non-limiting examples, "processor" may be a CPU or a GPU. A "computing platform" may comprise one or more processors. As used herein, "software" processes may include, for example, software and/or hardware entities that perform work over time, such as tasks, threads, and intelligent agents. Also, each process may refer to multiple processes, for carrying out instructions in sequence or in parallel, continuously or intermittently. In at least one embodiment, terms "system" and "method" are used herein interchangeably insofar as a system may embody one or more methods and methods may be considered a system.

In the present document, references may be made to obtaining, acquiring, receiving, or inputting analog or digital data into a subsystem, computer system, or computer-implemented machine. In at least one embodiment, a process of obtaining, acquiring, receiving, or inputting analog and digital data can be accomplished in a variety of ways such as by receiving data as a parameter of a function call or a call to an application programming interface. In at least one embodiment, processes of obtaining, acquiring, receiving, or inputting analog or digital data can be accomplished by transferring data via a serial or parallel interface. In at least one embodiment, processes of obtaining, acquiring, receiving, or inputting analog or digital data can be accomplished by transferring data via a computer network from providing entity to acquiring entity. In at least one embodiment, references may also be made to providing, outputting, transmitting, sending, or presenting analog or digital data. In various examples, processes of providing, outputting, transmitting, sending, or presenting analog or digital data can be accomplished by transferring data as an input or output parameter of a function call, a parameter of an application programming interface or interprocess communication mechanism.

Although descriptions herein set forth example embodiments of described techniques, other architectures may be used to implement described functionality, and are intended to be within scope of this disclosure. Furthermore, although specific distributions of responsibilities may be defined above for purposes of description, various functions and responsibilities might be distributed and divided in different ways, depending on circumstances.

Furthermore, although subject matter has been described in language specific to structural features and/or methodological acts, it is to be understood that subject matter claimed in appended claims is not necessarily limited to specific features or acts described. Rather, specific features and acts are disclosed as exemplary forms of implementing the claims.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

The disclosure of this application also includes the following numbered clauses:
Clause 1. A system comprising:
   a memory; and
   one or more processors, coupled to the memory, to:
      provide a first subset of a plurality of content items related to a target system architecture as input to a diagram parser to obtain a diagram parser output;
      provide the diagram parser output and a second subset of the plurality of content items related to the target system architecture as input to a first artificial intelligence (AI) embedding model to obtain a first AI embedding model output comprising encoded representations of the diagram parser output and the second subset of the plurality of content items related to the target system architecture; and
      provide at least a first portion of the encoded representations of the diagram parser output and the second subset of the plurality of content items related to the target system architecture as input to a first generative AI model to obtain a plurality of potential threats related to the target system architecture.
Clause 2. The system of clause 1, wherein the plurality of content items related to the target system architecture comprises at least one of:
   a visual representation of the target system architecture;
   a textual description of the target system architecture;
   a design document related to the target system; or
   a data flow diagram.
Clause 3. The system of clause 1, wherein the one or more processors are further to:
   provide one or more mitigation items as input to a second AI embedding model to obtain a second AI embedding model output comprising encoded representations of the one or more mitigation items; and
   provide at least a portion of the encoded representations of the one or more mitigation items and at least a first potential threat of the plurality of potential threats related to the target system architecture as input to a second generative AI model to obtain one or more mitigations related to the first potential threat of the plurality of potential threats.
Clause 4. The system of clause 3, wherein the one or more mitigation items comprise at least one of:
   known countermeasure documents;
   organization-specific policy documents; or
   standardized control documents.
Clause 5. The system of clause 3, wherein the one or more processors are further to:
   provide at least a first mitigation of the one or more mitigations related to the first potential threat of the plurality of potential threats and at least a second portion of the encoded representations of the diagram parser output and the second subset of the plurality of content items related to the target system architecture as input to a third generative AI model to obtain one or more mitigation recommendations related to the first potential threat of the plurality of potential threats.
Clause 6. The system of clause 5, wherein the one or more processors are further to generate a first risk score based at least on a first mitigation recommendation of the one or more mitigation recommendations related to the first potential threat of the plurality of potential threats.
Clause 7. The system of clause 6, wherein to generate the first risk score, the one or more processors are further to:
   provide one or more risk item as input to a third AI embedding model to obtain a third AI embedding model output comprising encoded representations of the one or more risk item; and
   provide at least a portion of the encoded representations of the one or more risk item and at least a first mitigation recommendation of the one or more mitigation recommendations related to the first potential threat of the plurality of potential threats as input to a fourth generative AI model to obtain the first risk score, wherein the first risk score is related to the first potential threat associated with the first mitigation recommendation.
Clause 8. The system of clause 7, wherein the one or more risk item comprise at least one of:
   a historical threat model;
   a standard guideline;
   an attacker effort estimation; or
   a threat impact estimate.
Clause 9. The system of clause 6, wherein the one or more processors are further to:
   provide a plurality of risk scores to a user associated with the target system architecture, wherein the plurality of risk scores comprises the first risk score related to the potential threat associated with the first mitigation recommendation and one or more additional risk scores related to other potential threats associated with the target system architecture.
Clause 10. The system of clause 1, wherein the memory comprises an embedding datastore, and wherein the one or more processors are further to store the first AI embedding model output in the embedding datastore of the memory.
Clause 11. The system of clause 1, wherein the diagram parser is an AI vision model.
Clause 12. A method comprising:
   providing a first subset of a plurality of content items related to a target system architecture as input to a diagram parser to obtain a diagram parser output;
   providing the diagram parser output and a second subset of the plurality of content items related to the target system architecture as input to a first artificial intelligence (AI) embedding model to obtain a first AI embedding model output comprising encoded representations of the diagram parser output and the second subset of the plurality of content items related to the target system architecture; and
   providing at least a first portion of the encoded representations of the diagram parser output and the second subset of the plurality of content items related to the target system architecture as input to a first generative AI model to obtain a plurality of potential threats related to the target system architecture.
Clause 13. The method of clause 12, wherein the plurality of content items related to the target system architecture comprises at least one of:
   a visual representation of the target system architecture;
   a textual description of the target system architecture;
   a design document related to the target system; or
   a data flow diagram.
Clause 14. The method of clause 12, further comprising:
   providing one or more mitigation items as input to a second AI embedding model to obtain a second AI embedding model output comprising encoded representations of the one or more mitigation items; and
   providing at least a portion of the encoded representations of the one or more mitigation items and at least a first potential threat of the plurality of potential threats related to the target system architecture as input to a second generative AI model to obtain one or more mitigations related to the first potential threat of the plurality of potential threats.
Clause 15. The method of clause 14, wherein the one or more mitigation items comprise at least one of:
   known countermeasure documents;
   organization-specific policy documents; or
   standardized control documents.
Clause 16. The method of clause 14, further comprising:
   providing at least a first mitigation of the one or more mitigations related to the first potential threat of the plurality of potential threats and at least a second portion of the encoded representations of the diagram parser output and the second subset of the plurality of content items related to the target system architecture as input to a third generative AI model to obtain one or more mitigation recommendations related to the first potential threat of the plurality of potential threats.
Clause 17. The method of clause 16, further comprising generating a first risk score based at least on a first mitigation recommendation of the one or more mitigation recommendations related to the first potential threat of the plurality of potential threats.
Clause 18. The method of clause 17, wherein generating the first risk score based at least on the first mitigation recommendation comprises:
   providing one or more risk item as input to a third AI embedding model to obtain a third AI embedding model output comprising encoded representations of the one or more risk item; and
   providing at least a portion of the encoded representations of the one or more risk item and at least a first mitigation recommendation of the one or more mitigation recommendations related to the first potential threat of the plurality of potential threats as input to a fourth generative AI model to obtain the first risk score, wherein the first risk score is related to the first potential threat associated with the first mitigation recommendation.
Clause 19. The method of clause 17, further comprising:
   providing a plurality of risk scores to a user associated with the target system architecture, wherein the plurality of risk scores comprises the first risk score related to the potential threat associated with the first mitigation recommendation and one or more additional risk scores related to other potential threats associated with the target system architecture.
Clause 20. A non-transitory computer-readable storage medium comprising instructions that, when executed by one or more processors, cause the one or more processors to perform operations comprising:
   providing a first subset of a plurality of content items related to a target system architecture as input to a diagram parser to obtain a diagram parser output;
   providing the diagram parser output and a second subset of the plurality of content items related to the target system architecture as input to a first artificial intelligence (AI) embedding model to obtain a first AI embedding model output comprising encoded representations of the diagram parser output and the second subset of the plurality of content items related to the target system architecture; and
   providing at least a first portion of the encoded representations of the diagram parser output and the second subset of the plurality of content items related to the target system architecture as input to a first generative AI model to obtain a plurality of potential threats related to the target system architecture.

## Claims

1. A system comprising:
a memory; and
one or more processors, coupled to the memory, to:
provide a first subset of a plurality of content items related to a target system architecture as input to a diagram parser to obtain a diagram parser output;
provide the diagram parser output and a second subset of the plurality of content items related to the target system architecture as input to a first artificial intelligence (AI) embedding model to obtain a first AI embedding model output comprising encoded representations of the diagram parser output and the second subset of the plurality of content items related to the target system architecture; and
provide at least a first portion of the encoded representations of the diagram parser output and the second subset of the plurality of content items related to the target system architecture as input to a first generative AI model to obtain a plurality of potential threats related to the target system architecture.

2. The system of claim 1, wherein the plurality of content items related to the target system architecture comprises at least one of:
a visual representation of the target system architecture;
a textual description of the target system architecture;
a design document related to the target system; or
a data flow diagram.

3. The system of claim 1 or 2, wherein the one or more processors are further to:
provide one or more mitigation items as input to a second AI embedding model to obtain a second AI embedding model output comprising encoded representations of the one or more mitigation items; and
provide at least a portion of the encoded representations of the one or more mitigation items and at least a first potential threat of the plurality of potential threats related to the target system architecture as input to a second generative AI model to obtain one or more mitigations related to the first potential threat of the plurality of potential threats.

4. The system of claim 3, wherein the one or more mitigation items comprise at least one of:
known countermeasure documents;
organization-specific policy documents; or
standardized control documents.

5. The system of claim 3 or 4, wherein the one or more processors are further to:
provide at least a first mitigation of the one or more mitigations related to the first potential threat of the plurality of potential threats and at least a second portion of the encoded representations of the diagram parser output and the second subset of the plurality of content items related to the target system architecture as input to a third generative AI model to obtain one or more mitigation recommendations related to the first potential threat of the plurality of potential threats.

6. The system of claim 5, wherein the one or more processors are further to generate a first risk score based at least on a first mitigation recommendation of the one or more mitigation recommendations related to the first potential threat of the plurality of potential threats.

7. The system of claim 6, wherein to generate the first risk score, the one or more processors are further to:
provide one or more risk item as input to a third AI embedding model to obtain a third AI embedding model output comprising encoded representations of the one or more risk item; and
provide at least a portion of the encoded representations of the one or more risk item and at least a first mitigation recommendation of the one or more mitigation recommendations related to the first potential threat of the plurality of potential threats as input to a fourth generative AI model to obtain the first risk score, wherein the first risk score is related to the first potential threat associated with the first mitigation recommendation.

8. The system of claim 7, wherein the one or more risk item comprise at least one of:
a historical threat model;
a standard guideline;
an attacker effort estimation; or
a threat impact estimate.

9. The system of claim 6, 7, or 8, wherein the one or more processors are further to:
provide a plurality of risk scores to a user associated with the target system architecture, wherein the plurality of risk scores comprises the first risk score related to the potential threat associated with the first mitigation recommendation and one or more additional risk scores related to other potential threats associated with the target system architecture.

10. The system of any of claims 1-9, wherein the memory comprises an embedding datastore, and wherein the one or more processors are further to store the first AI embedding model output in the embedding datastore of the memory.

11. The system of any of claims 1-10, wherein the diagram parser is an AI vision model.

12. A method comprising:
providing a first subset of a plurality of content items related to a target system architecture as input to a diagram parser to obtain a diagram parser output;
providing the diagram parser output and a second subset of the plurality of content items related to the target system architecture as input to a first artificial intelligence (AI) embedding model to obtain a first AI embedding model output comprising encoded representations of the diagram parser output and the second subset of the plurality of content items related to the target system architecture; and
providing at least a first portion of the encoded representations of the diagram parser output and the second subset of the plurality of content items related to the target system architecture as input to a first generative AI model to obtain a plurality of potential threats related to the target system architecture.

13. The method of claim 12, wherein the plurality of content items related to the target system architecture comprises at least one of:
a visual representation of the target system architecture;
a textual description of the target system architecture;
a design document related to the target system; or
a data flow diagram.

14. The method of claim 12 or 13, further comprising:
providing one or more mitigation items as input to a second AI embedding model to obtain a second AI embedding model output comprising encoded representations of the one or more mitigation items; and
providing at least a portion of the encoded representations of the one or more mitigation items and at least a first potential threat of the plurality of potential threats related to the target system architecture as input to a second generative AI model to obtain one or more mitigations related to the first potential threat of the plurality of potential threats.

15. A non-transitory computer-readable storage medium comprising instructions that, when executed by one or more processors, cause the one or more processors to perform operations comprising:
providing a first subset of a plurality of content items related to a target system architecture as input to a diagram parser to obtain a diagram parser output;
providing the diagram parser output and a second subset of the plurality of content items related to the target system architecture as input to a first artificial intelligence (AI) embedding model to obtain a first AI embedding model output comprising encoded representations of the diagram parser output and the second subset of the plurality of content items related to the target system architecture; and
providing at least a first portion of the encoded representations of the diagram parser output and the second subset of the plurality of content items related to the target system architecture as input to a first generative AI model to obtain a plurality of potential threats related to the target system architecture.
